# EUROPEAN PATENT APPLICATION

(11) **EP 2 979 886 A1**
(43) Date of publication of application: **03.02.2016**
(21) Application number: 14772981.8
(22) Date of filing: 25.03.2014
(51) Int. Cl.: B41M 5/00, B41J 2/01, B41M 5/50, B41M 5/52, C09D 11/00

(54) **INKJET RECORDING METHOD, PRINTING SUBSTANCE, AND INK SET**

(30) Priority: 26.03.2013 JP 2013063233
(71) Applicant: Fujifilm Corporation, Minato-ku Tokyo 106-8620 (JP)
(72) Inventor: FUJII Yuusuke, Ashigarakami-gun Kanagawa 258-8577 (JP)
(74) Representative: Hoffmann Eitle
(86) International application number: PCT/JP2014/058169
(87) International publication number: WO 2014/157130

(57) **Abstract**

An inkjet recording method comprising, in order, a step of applying an undercoat solution having a pH of no greater than six to a substrate, a discharge step of discharging an ink composition onto the substrate to which the undercoat solution has been applied, a drying step of drying the ink composition above the substrate by means of heat, and a curing step of curing the ink composition above the substrate by irradiation with actinic radiation, the ink composition comprising (Component A) a polymer compound comprising a monomer unit (a-1) having a partial structure represented by Formula (1) below, (Component B) water, and (Component C) a pigment.

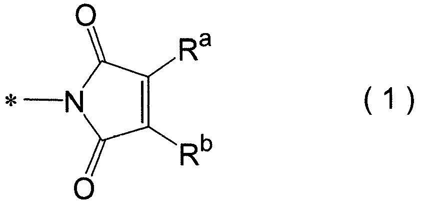

## Description

The present invention relates to an inkjet recording method, a printed material, and an ink set.

As image recording methods for forming an image on a recording medium such as paper based on an image data signal, there are an electrophotographic system, sublimation type and melt type thermal transfer systems, an inkjet system, etc. The electrophotographic method requires a process of forming an electrostatic latent image on a photosensitive drum by electric charging and exposure to light and has the problem that the system becomes complicated, thus resulting in high production costs, etc. With regard to the thermal transfer method, although the equipment is inexpensive, due to the use of an ink ribbon the running costs are high and there is the problem of waste material being generated.

On the other hand, the inkjet method employs inexpensive equipment, and since image formation is carried out directly above a recording medium by discharging an ink only onto a required image area, the ink composition can be used efficiently, and the running costs are low. Furthermore, noise is low, and it is excellent as an image recording method.

With regard to ink compositions used in an image recording by the inkjet system, an aqueous inks have excellent safety because water is a main component, and is a technology having many excellent feature and possibility.

Example of a conventional aqueous ink composition is an aqueous ink composition described in Patent Document 1.
Patent Document 1: JP-A-2012-46569 (JP-A denotes a Japanese unexamined patent application publication)

An aqueous ink composition has the problems that penetration of an aqueous ink composition into a substrate (recording medium) is low and deposition interference between fired droplets discharged by inkjet easily occurs.

It is an object of the present invention to provide an inkjet recording method that gives an image in which deposition interference is suppressed and, furthermore, can give an image that is excellent in terms of curability and adhesion to a substrate. Moreover, it is an object thereof to provide a printed material obtained by the inkjet recording method, and an ink set for use in the inkjet recording method.

The objects of the present invention have been attained by means described in <1>, <28>, and <29> below. They are described together with <2> to <27>, which are preferred embodiments.
<1> An inkjet recording method comprising, in order, a step of applying an undercoat solution having a pH of no greater than six (preferably pH 0.3 to 6.0, more preferably pH 0.4 to 5.0, yet more preferably 0.5 to 4.0, and particularly preferably 0.5 to 2.0) to a substrate, a discharge step of discharging an ink composition onto the substrate to which the undercoat solution has been applied, a drying step of drying the ink composition above the substrate by means of heat, and a curing step of curing the ink composition above the substrate by irradiation with actinic radiation, the ink composition comprising (Component A) a polymer compound comprising a monomer unit (a-1) having a partial structure represented by Formula (1) below, (Component B) water, and (Component C) a pigment, 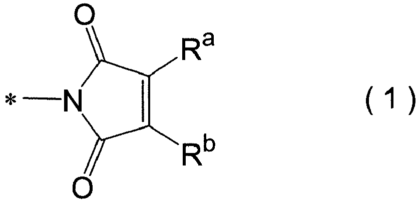 wherein in Formula (1), R^{a} and R^{b} mutually independently denote a hydrogen atom or an alkyl group having 1 to 4 carbons, at least one of R^{a} and R^{b} denotes an alkyl group having 1 to 4 carbons, R^{a} and R^{b} may be bonded to each other to form a 4- to 6-membered alicyclic structure, and * denotes a position of bonding,
<2> the inkjet recording method according to <1>, wherein Component A has an SP value of 20.7 MPa^{1/2} to 23.0 MPa^{1/2} (more preferably 21.2 MPa^{1/2} to 22.8 MPa^{1/2} and yet more preferably 21.5 MPa^{1/2} to 22.5 MPa^{1/2}),
<3> the inkjet recording method according to <1> or <2>, wherein Component A further comprises a hydrophilic group-containing monomer unit (a-2), the monomer unit (a-2) having in Component A a content of 5 mass% to 45 mass% (more preferably 8 mass% to 25 mass%, yet more preferably 10 to 23 mass%, and particularly preferably 10 to 20 mass%),
<4> the inkjet recording method according to <3>, wherein the hydrophilic group-containing monomer unit (a-2) is represented by Formula (3) below, 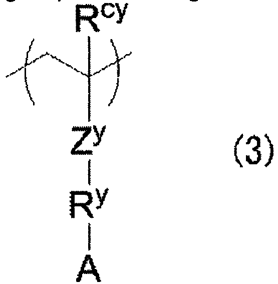 wherein in Formula (3) R^{cy} denotes a hydrogen atom or a methyl group, Z^{y} denotes -COO-***, -CONR^{dy}-***, or a single bond, R^{dy} denotes a hydrogen atom or an alkyl group having 1 to 4 carbons, R^{y} denotes a single bond, an alkylene group having 1 to 10 carbons, an arylene group having 6 to 20 carbons, or an aralkylene group having 7 to 20 carbons, A denotes a hydrophilic group, and *** denotes the position via which Z^{y} is bonded to R^{y},
<5> the inkjet recording method according to <3> or <4>, wherein the hydrophilic group-containing monomer unit (a-2) is a monomer unit comprising at least one type of hydrophilic group selected from an alcoholic hydroxy group, an alkyl-substituted carbamoyl group, a carboxyl group, a sulfo group, and a salt thereof (more preferably at least one type of hydrophilic group selected from a carboxyl group and a salt thereof),
<6> the inkjet recording method according to any one of <3> to <5>, wherein the hydrophilic group-containing monomer unit (a-2) is derived from a monomer selected from (meth)acrylic acid and a salt thereof,
<7> the inkjet recording method according to any one of <1> to <6>, wherein the substrate is a non-permeable substrate,
<8> the inkjet recording method according to any one of <1> to <7>, wherein the substrate is a non-permeable plastic substrate,
<9> the inkjet recording method according to any one of <1> to <8>, wherein the discharge step is carried out by a single pass method,
<10> the inkjet recording method according to any one of <1> to <9>, wherein the undercoat solution comprises an organic acid (more preferably a divalent organic acid),
<11> the inkjet recording method according to any one of <1> to <10>, wherein the undercoat solution has a surface tension of no greater than 45 mN/m (more preferably 20 mN/m to 40 mN/m),
<12> the inkjet recording method according to any one of <1> to <11>, wherein the ink composition has a surface tension of no greater than 45 mN/m (more preferably 20 mN/m to 40 mN/m),
<13> the inkjet recording method according to any one of <1> to <12>, wherein Component A comprises 8 to 200 of the partial structures represented by Formula (1) per molecule,
<14> the inkjet recording method according to any one of <1> to <13>, wherein the monomer unit (a-1) having a partial structure represented by Formula (1) is a monomer unit represented by Formula (2) below, 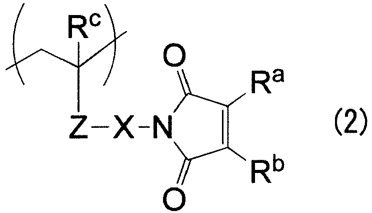 wherein in Formula (2), R^{a} and R^{b} mutually independently denote a hydrogen atom or an alkyl group having 1 to 4 carbons, at least one of R^{a} and R^{b} denotes an alkyl group having 1 to 4 carbons, R^{a} and R^{b} may be bonded to each other to form a 4- to 6-membered alicyclic structure, R^{c} denotes a hydrogen atom or a methyl group, Z denotes a single bond, -COO-**, or -CONR^{d}-**, R^{d} denotes a hydrogen atom or an alkyl group having 1 to 4 carbons, ** denotes the position of bonding to X, and X denotes a divalent organic group,
<15> the inkjet recording method according to any one of <1> to <14>, wherein Component C is contained at 10 to 97 mass% of the entire ink composition,
<16> the inkjet recording method according to any one of <1> to <15>, wherein the ink composition has a viscosity of 5 mPa·sec to 30 mPa·sec,
<17> the inkjet recording method according to any one of <1> to <16>, wherein the ink composition comprises an organic solvent (more preferably a water-soluble organic solvent, and yet more preferably a water-soluble organic solvent having a boiling point at normal pressure of at least 120°C),
<18> the inkjet recording method according to any one of <1> to <17>, wherein the monomer unit (a-1) having a partial structure represented by Formula (1) has a content of 20 to 70 mass% relative to the total mass of Component A (more preferably 30 to 70 mass%, and yet more preferably 40 to 60 mass%),
<19> the inkjet recording method according to any one of <1> to <18>, wherein Component A further comprises a hydrophobic monomer unit (a-3) other than the monomer unit (a-1) having a partial structure represented by Formula (1),
<20> the inkjet recording method according to <19>, wherein the hydrophobic monomer unit (a-3) is a monomer unit derived from an alkyl (meth)acrylate having 4 to 22 carbons,
<21> the inkjet recording method according to <19> or <20>, wherein the hydrophobic monomer unit (a-3) has a content of 5 to 72 mass% relative to the total mass of Component A (more preferably 20 to 65 mass%, and yet more preferably 25 to 60 mass%),
<22> the inkjet recording method according to any one of <1> to <21>, wherein the polymerization initiator has in the ink composition a content of no greater than 5 mass% (more preferably no greater than 3 mass%, yet more preferably no greater than 1 mass%, and particularly preferably 0 mass%),
<23> the inkjet recording method according to any one of <1> to <22>, wherein a radically polymerizable compound and a cationically polymerizable compound have in the ink composition a content of no greater than 5 mass% (more preferably no greater than 3 mass%, yet more preferably no greater than 1 mass%, and particularly preferably 0 mass%),
<24> the inkjet recording method according to any one of <1> to <23>, wherein the undercoat solution comprises an acidic compound, the acidic compound having a content of 3 to 60 mass% relative to the total mass of the undercoat solution (more preferably 5 to 50 mass% and yet more preferably 10 to 40 mass%),
<25> the inkjet recording method according to any one of <1> to <24>, wherein the undercoat solution comprises an acidic compound, the acidic compound having an amount applied to the substrate of 0.01 mmol·eq/m² to 5 mmol·eq/m² (preferably 0.05 mmol·eq/m² to 2.5 mmol.eq/m² and more preferably 0.1 mmol·eq/m² to 2 mmol·eq/m²),
<26> the inkjet recording method according to any one of <1> to <25>, wherein the inkjet recording method comprises, subsequent to the discharge step but prior to the curing step, a first wiping step of wiping the substrate surface,
<27> the inkjet recording method according to any one of <1> to <26>, wherein the inkjet recording method comprises, subsequent to the curing step, a second wiping step of wiping the substrate surface,
<28> a printed material obtained by the method according to any one of <1> to <27>, and
<29> an ink set for inkjet recording comprising an undercoat solution having a pH of no greater than six and an ink composition, the ink composition comprising (Component A) a polymer compound comprising a monomer unit (a-1) having a partial structure represented by Formula (1) below, (Component B) water, and (Component C) a pigment, 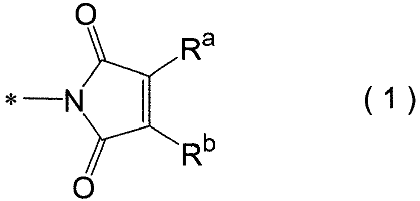 wherein in Formula (1), R^{a} and R^{b} mutually independently denote a hydrogen atom or an alkyl group having 1 to 4 carbons, at least one of R^{a} and R^{b} denotes an alkyl group having 1 to 4 carbons, R^{a} and R^{b} may be bonded to each other to form a 4- to 6-membered alicyclic structure, and * denotes a position of bonding.

In accordance with the present invention, there can be provided an inkjet recording method that can give an image having suppressed deposition interference and, furthermore, that can give an image that is excellent in terms of curability and adhesion to a substrate. Moreover, there can be provided a printed material obtained by the inkjet recording method, and an ink set for use in the inkjet recording method.

The inkjet recording method of the present invention comprises, in order, a step of applying an undercoat solution having a pH of no greater than six to a substrate, a discharge step of discharging an ink composition onto the substrate to which the undercoat solution has been applied, a drying step of drying the ink composition above the substrate by means of heat, and a curing step of curing the ink composition above the substrate by irradiation with actinic radiation, the ink composition comprising (Component A) a polymer compound comprising a monomer unit (a-1) having a partial structure represented by Formula (1) below, (Component B) water, and (Component C) a pigment. 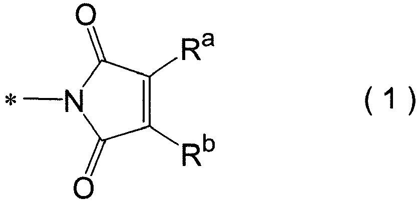 (In Formula (1), R^{a} and R^{b} mutually independently denote a hydrogen atom or an alkyl group having 1 to 4 carbons, at least one of R^{a} and R^{b} denotes an alkyl group having 1 to 4 carbons, R^{a} and R^{b} may be bonded to each other to form a 4- to 6-membered alicyclic structure, and * denotes a position of bonding.)

In the present invention, the notation 'A to B', which denotes a numerical range, means 'at least A but no greater than B' (when A < B) or 'no greater than A but at least B' (when A > B) unless otherwise specified. That is, it means a numerical range that includes A and B, which are end points. Furthermore, '(Component B) water', etc. is also called simply 'Component B', etc., and 'monomer unit (a-1) having a partial structure represented by Formula (1)', etc. is also called simply 'monomer unit (a-1)', etc. Moreover, the ink composition comprising Component A to Component C is also called 'the ink composition of the present invention', and an undercoat solution having a pH of no greater than six is also called 'the undercoat solution of the present invention'.

In addition, 'mass%' and 'parts by mass' have the same meanings as 'wt%' and 'parts by weight' respectively. Furthermore, in the present invention, '(meth)acrylate' means both or either of 'acrylate' and 'methacrylate', and '(meth)acrylic' means both or either of 'acrylic' and 'methacrylic'. Similarly, '(meth)acrylamide' means both or either of 'acrylamide' and 'methacrylamide'.

Moreover, in the chemical structural formulae in the present invention, a hydrocarbon chain may be given as a simplified structural formula in which symbols for carbon (C) and hydrogen (H) are omitted.

In the present invention, a combination of preferred embodiments is more preferable.

Conventionally, an inkjet recording method employing an aqueous ink has the problem that after the ink has landed on a substrate, deposition interference occurs.

As a result of an intensive investigation by the present inventors, it has been found that the problem can be solved by discharging an aqueous ink composition comprising Component A to Component C after an undercoat solution having a pH of no greater than six has been applied to a substrate, and the present invention has thus been accomplished.

Although the mechanism thereof is not clear, it is surmised that when an undercoat solution having a pH of no greater than six is applied to a substrate, Component A in the landed ink composition aggregates and behaves as if it had been subjected to pinning, thereby suppressing deposition interference. Because of this, compared with a conventional aqueous ink, the occurrence of image disturbance is suppressed, and an image having high image quality is obtained.

Furthermore, although the mechanism thereof is not clear, it is surmised that due to aggregation the points at which crosslinking occurs are closer and curability is improved.

Such a method does not avoid deposition interference by a mechanical method (temperature control, light, etc.) and is advantageous in terms of system cost.

The ink composition of the present invention and the undercoat solution of the present invention are explained below, and the inkjet recording method of the present invention is then explained.

### 1. Ink composition

The ink composition of the present invention comprises (Component A) a polymer compound comprising a monomer unit (a-1) having a partial structure represented by Formula (1) below, (Component B) water, and (Component C) a pigment.

Each component contained in the ink composition of the present invention is explained in detail below.
(Component A) Polymer compound comprising monomer unit (a-1) having partial structure represented by Formula (1) below

The ink composition of the present invention comprises (Component A) a polymer compound comprising a monomer unit (a-1) having a partial structure represented by Formula (1) below (hereinafter, also called a 'specific polymer').

Each of the monomer units contained in the specific polymer contained in the ink composition of the present invention and the physical properties of the specific polymer are explained below.
(Monomer unit (a-1) having partial structure represented by Formula (1))

The specific copolymer comprises a monomer unit (a-1) having a partial structure represented by Formula (1). 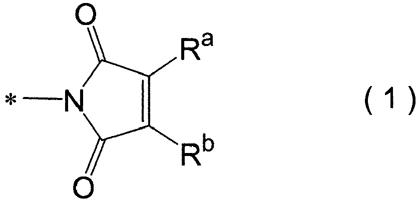 (In Formula (1), R^{a} and R^{b} mutually independently denote a hydrogen atom or an alkyl group having 1 to 4 carbons, at least one of R^{a} and R^{b} denotes an alkyl group having 1 to 4 carbons, R^{a} and R^{b} may be bonded to each other to form a 4- to 6-membered alicyclic structure, and * denotes a position of bonding.)

In Formula (1), an alkyl group having 1 to 4 carbon atoms denoted by R^{a} or R^{b} may have a linear structure or a branched structure. Specific examples thereof include a methyl group, an ethyl group, a propyl group, an isopropyl group, a butyl group, an isobutyl group, a *sec*-butyl group and a *t*-butyl group. Among these alkyl groups, an alkyl group having 1 or 2 carbon atoms (i.e., a methyl group or an ethyl group) is preferable, and an alkyl group having 1 carbon atom (i. e., a methyl group) is particularly preferable.

In Formula (1), an alkyl group denoted by R^{a} or R^{b} may have a substituent or may not have a substituent, but the alkyl group not having a substituent is preferable.

R^{a} and R^{b} may be bound to each other to form a 4- to 6-membered alicyclic structure.

In Formula (1), at least one of R^{a} and R^{b} denotes an alkyl group having 1 to 4 carbon atoms. When both of R^{a} and R^{b} denote hydrogen atoms, the reactivity and the stability are poor.

With regard to R^{a} and R^{b}, it is preferable for both thereof to be alkyl groups having 1 to 4 carbon atoms or for R^{a} and R^{b} to be bonded to form a 4-to 6-membered alicyclic structure, it is more preferable for both R^{a} and R^{b} to be alkyl groups having 1 or 2 carbon atoms, and it is yet more preferable for both R^{a} and R^{b} to be alkyl groups having one carbon atom (methyl groups).

Specific examples of the partial structure represented by Formula (1) are shown below. However, the present invention is not limited thereto.

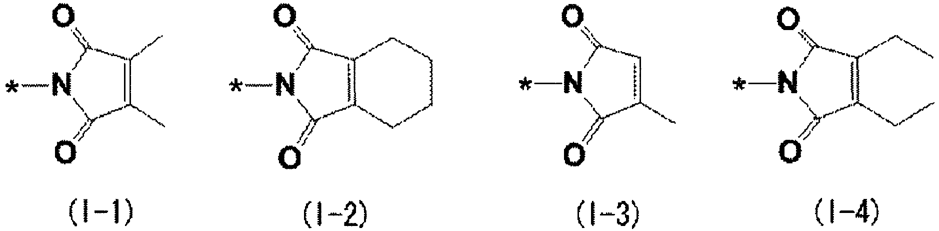

The specific copolymer may have a plurality of partial structures represented by Formula (1) in a side chain.

The monomer unit (a-1) having a partial structure represented by Formula (1) is preferably a monomer unit represented by Formula (2) below.

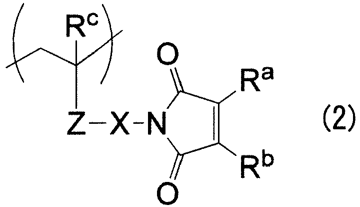

In Formula (2), R^{a} and R^{b} mutually independently denote a hydrogen atom or an alkyl group having 1 to 4 carbon atoms, at least one of R^{a} and R^{b} denotes an alkyl group having 1 to 4 carbon atoms, R^{a} and R^{b} may be bonded to each other to form a 4- to 6-membered alicyclic structure, R^{c} denotes a hydrogen atom or a methyl group, Z denotes a single bond, -COO-**, or-CONR^{d}-**, R^{d} denotes a hydrogen atom or an alkyl group having 1 to 4 carbon atoms, ** denotes the position of bonding to X, and X denotes a divalent organic group.

In Formula (2), R^{a} and R^{b} mutually independently denote a hydrogen atom or an alkyl group having 1 to 4 carbon atoms. R^{a} and R^{b} may be bonded to each other to form a 4- to 6-membered alicyclic structure.

R^{a} and R^{b} in Formula (2) have the same meanings as those of R^{a} and R^{b} in Formula (1), and preferred ranges are also the same.

In Formula (2), R^{c} denotes a hydrogen atom or a methyl group. R^{c} is preferably a methyl group.

In Formula (2), Z denotes a single bond, -COO-**, or -CONR^{d}-**, R^{d} denotes a hydrogen atom or an alkyl group having 1 to 4 carbon atoms, ** denotes the position of bonding to X, and X denotes a divalent organic group. Z is preferably -COO-**.

R^{d} in -CONR^{d}-** above denotes a hydrogen atom or an alkyl group having 1 to 4 carbon atoms. The alkyl group having 1 to 4 carbon atoms denoted by R^{d} may have a linear structure or a branched structure. Specific examples thereof include a methyl group, an ethyl group, a propyl group, an isopropyl group, a butyl group, an isobutyl group, a *sec*-butyl group and a *t*-butyl group. R^{d} is preferably a hydrogen atom or an alkyl group having 1 or 2 carbon atoms, that is, a methyl group or an ethyl group, and it is particularly preferable that R^{d} is a hydrogen atom. When R^{d} denotes an alkyl group, the alkyl group may have a substituent or may not have a substituent, but the alkyl group not having a substituent is preferable.

In Formula (2), X denotes a divalent organic group. Examples of the divalent organic group includes an alkylene group and an aralkylene group, and an alkylene group having 2 to 20 carbon atoms and an aralkylene group having 6 to 12 carbon atoms are preferable. X is more preferably an alkylene group.

When X denotes an alkylene group, the alkylene group preferably has 2 to 20 carbon atoms, more preferably has 2 to 12 carbon atoms, and yet more preferably has 2 to 8 carbon atoms. When the number of carbon atoms of the alkylene group denoted by X is in this range, the mobility of a partial structure represented by Formula (1) at a side chain terminal of a specific copolymer improves, and the effect of the present invention improves.

The alkylene group denoted by X may be one having a straight-chain structure, one having a branch in an alkylene chain, or one having a cyclic structure. Furthermore, the alkylene group may comprise a bond selected from -O-, -COO-, -OC(=O)-, and -CONH- in the alkylene chain. The alkylene group may also be substituted with an alkyl group having no greater than 4 carbon atoms, a hydroxy group, or a chlorine atom.

In Formula (2), it is preferably that R^{a} and R^{b} each independently denote an alkyl group having 1 or 2 carbon atoms, R^{c} denotes a methyl group, Z denotes -COO-**, and X denotes an alkylene group having 2 to 12 carbon atoms.

The content of the monomer unit (a-1) having a partial structure represented by Formula (1) (preferably the monomer unit represented by Formula (2)) in the specific copolymer may be selected appropriately according to the intended properties of a cured film (image) formed from the ink composition. The content of the monomer unit (a-1) having a partial structure represented by Formula (1) is preferably 20 to 70 mass%, more preferably 30 to 70 mass%, and yet more preferably 40 to 60 mass% from the viewpoint of the strength and flexibility of an image formed.

It is preferable for the content of the monomer unit (a-1) having a partial structure represented by Formula (1) to be in this range since the image strength is excellent. When forming an image having excellent flexibility, the lower the content is in the above range the better.

The specific copolymer may comprise only one type of monomer unit (a-1) having a partial structure represented by Formula (1), or two or more types thereof.

The specific polymer preferably comprises 8 to 200 partial structures represented by Formula (1) per molecule, more preferably 8 to 150 partial structures, yet more preferably 8 to 120 partial structures, and particularly preferably 10 to 100 partial structures. From the viewpoint of curability and discharge properties it is preferable for the number of partial structures represented by Formula (1) per molecule of the specific polymer to be within this range.

The monomer unit (a-1) having a partial structure represented by Formula (1) may be introduced into a specific copolymer by copolymerization using a monomer having a partial structure represented by Formula (1) as one of the copolymerization components. When the monomer unit (a-1) having a partial structure represented by Formula (1) is a monomer unit represented by Formula (2), a monomer represented by Formula (2') below may be used for synthesis of the specific copolymer.

Furthermore, the partial structure represented by Formula (1) may be introduced by a method employing a polymer reaction. Examples of such a method include a method in which a corresponding anhydride is reacted with a prepolymer having a primary amino group and a method in which a compound having a partial structure represented by Formula (1) and a functional group that reacts with a functional group in a prepolymer to form a bond is reacted with the prepolymer.

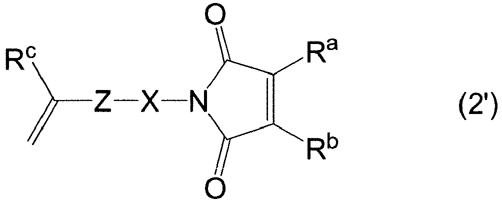

In Formula (2'), R^{a} R^{b}, R^{c}, Z and X have the same meanings as those of R^{a} ,R^{b}, R^{c}, Z and X in Formula (2), respectively, and preferred ranges are also the same.

Preferred examples of the monomer represented by Formula (2') include following monomers (2'-1) to (2'-11). However the present invention is not limited thereto.

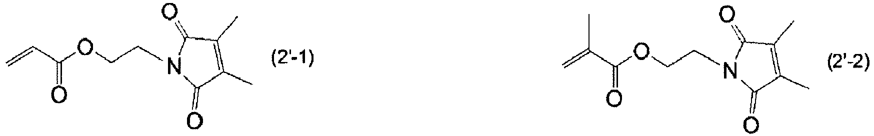

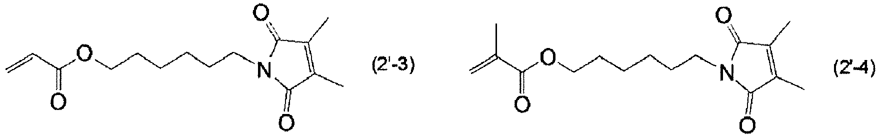

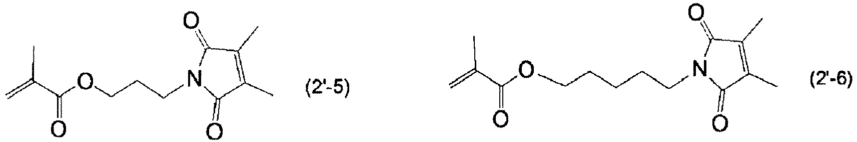

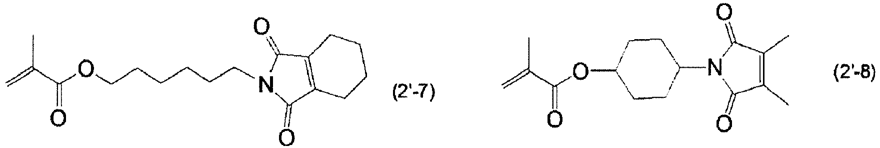

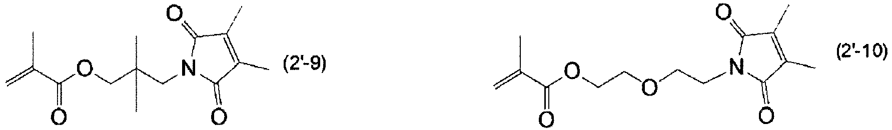

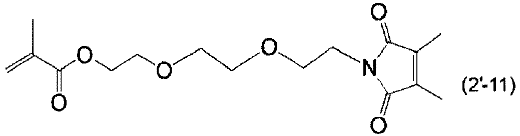

The monomer comprising a partial structure represented by Formula (1), whose representative examples are monomers (2'-1) to (2'-11), may be produced by reference to methods described in for example JP-A-52-988, JP-A-4-251258, etc.

### (Monomer unit (a-2) having hydrophilic group)

In the present invention, the specific copolymer preferably comprises a monomer unit (a-2) having a hydrophilic group. The hydrophilic monomer unit of course means a monomer unit other than the monomer unit (a-1) having a partial structure represented by Formula (1).

The hydrophilic group is not limited, and may be any of a nonionic hydrophilic group or an ionic hydrophilic group such as an anionic hydrophilic group or a cationic hydrophilic group as long as the group serves to enhance the hydrophilicity of the specific copolymer.

The nonionic hydrophilic group is not particularly limited, and examples thereof include nonionic hydrophilic groups such as a carbamoyl group, an alkyl-substituted carbamoyl group, an alcoholic hydroxy group, and a group having a polyalkyleneoxy structure.

Examples of the alkyl-substituted carbamoyl group include a monoalkylcarbamoyl group in which a hydrogen atom bonded to the nitrogen atom of a carbamoyl group (-C(=O)-NH₂) is replaced by an alkyl group and a dialkylcarbamoyl group in which two hydrogen atoms bonded to the nitrogen atom of a carbamoyl group are replaced by alkyl groups. The alkyl group may further be optionally substituted with a hydroxy group, etc. Among these alkyl-substituted carbamoyl groups, a monoalkyl carbamoyl group substituted with an alkyl group having 1 to 8 carbon atoms or an alkyl group having 1 to 4 carbon atoms that is substituted with a hydroxy group is preferable.

The group having a polyalkyleneoxy structure is not particularly limited, but is preferably a polyalkyleneoxy structure having an alkyleneoxy group having 1 to 4 carbon atoms in a monomer unit, and is more preferably a polyalkyleneoxy structure in which an alkyleneoxy group is repeated four or more times. With regard to the alkyleneoxy group in the polyalkyleneoxy structure, one type may be present or a plurality of types of alkyleneoxy groups may be present in combination. The terminal group of the polyalkyleneoxy structure is preferably a hydroxy group or an alkoxy group, and more preferably a hydroxy group or a methoxy group.

The ionic hydrophilic group is not particularly limited; examples thereof include ionic hydrophilic groups such as a carboxyl group, a sulfo group, a phosphoric acid group, a phosphonic acid group, a phenolic hydroxy group, and a quaternary ammonium group. The ionic hydrophilic group may form a salt.

When the ionic hydrophilic group forms a salt, examples of the counter salt include an alkali metal salt (Li, Na, K, etc.) and an onium salt such as an ammonium salt, a pyridinium salt, or a phosphonium salt. Among them, an alkali metal salt (Li, Na, K, etc.) or an ammonium salt is preferable.

Among these hydrophilic groups, a carbamoyl group, an alkyl-substituted carbamoyl group, an alcoholic hydroxy group, a group having a polyalkyleneoxy structure, and a carboxyl group or a salt thereof are preferable, and an alcoholic hydroxy group, an alkyl-substituted carbamoyl group, and a carboxyl group or a salt thereof are more preferable. A carboxyl group or a salt thereof is yet more preferable.

When the hydrophilic group-containing monomer unit (a-2) comprises an ionic hydrophilic group, needless to say, its state changes according to the pH of the ink composition; for example, when a carboxyl group is contained as the hydrophilic group, the carboxyl group and the salt thereof coexist depending on the pH of the ink composition.

The monomer unit (a-2) having a hydrophilic group is preferably a monomer unit represented by Formula (3) below.

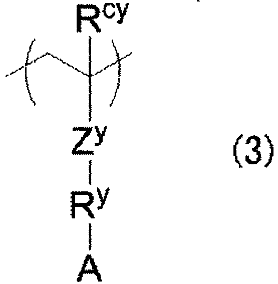

In Formula (3), R^{cy} denotes a hydrogen atom or a methyl group. Z^{y} denotes-COO-***, -CONR^{dy}-***, or a single bond, R^{dy} denotes a hydrogen atom or an alkyl group having 1 to 4 carbon atoms. R^{y} denotes a single bond, an alkylene group, an arylene group, or an aralkylene group. A denotes a hydrophilic group. *** denotes the position of Z^{y} bonding to R^{y}.

Formula (3) is explained in detail below.

In Formula (3), R^{cy} denotes a hydrogen atom or a methyl group.

In Formula (3), Z^{y} denotes -COO-***, -CONR^{dy}-***, or a single bond, and preferably -COO-***. *** denotes the position of Z^{y} bonding to R^{y}.

R^{dy} denotes a hydrogen atom or an alkyl group having 1 to 4 carbon atoms. The alkyl group having 1 to 4 carbon atoms may have a straight-chain structure or a branched structure. Specific examples include a methyl group, an ethyl group, a propyl group, an isopropyl group, a butyl group, an isobutyl group, a *sec*-butyl group, and a *t*-butyl group. R^{dy} is preferably a hydrogen atom or an alkyl group having 1 or 2 carbon atoms (i.e., a methyl group or an ethyl group), and particularly preferably a hydrogen atom.

R^{dy} may have a substituent or may not have a substituent, but the alkyl group not having a substituent is preferable. Examples of the substituent that R^{dy} may have include an aryl group having 6 to 8 carbon atoms, an alkoxy group having 1 to 8 carbon atoms, a hydroxy group, a carboxy group, and a halogen atom such as F, Cl, Br or I.

In Formula (3), R^{y} denotes a single bond, an alkylene group, an arylene group, or an aralkylene group, and is preferably an alkylene group having 1 to 20 carbon atoms, an arylene group having 6 to 20 carbon atoms, or an aralkylene group having 7 to 20 carbon atoms.

When R^{y} denotes an alkylene group, an arylene group, or an aralkylene group, these groups may have a substituent or may not have a substitutent. Examples of the substituent include an aryl group having 6 to 8 carbon atoms, an alkoxy group having 1 to 8 carbon atoms, a hydroxy group, a carboxy group, and a halogen atom such as F, Cl, Br, or I. Furthermore, the alkylene group, arylene group and aralkylene group denoted by Ry may contain an ether bond, a carbonyl group (-C(=O)-), an ester bond, an amide bond, or a urethane bond in its structure.

In Formula (3), R^{y} is preferably a single bond.

When R^{y} is an alkylene group having 1 to 20 carbon atoms, the alkylene group may have a straight-chain structure, a branched structure, or a cyclic structure. The number of carbon atoms of the alkylene group denoted by R^{y} is more preferably 2 to 12, and yet more preferably 2 to 8. Specific examples of the alkylene group denoted by R^{y} include -CH₂-, -C₂H₄-, -C(CH₃)₂-CH₂-, -CH₂C(CH₃)₂CH₂-, -C₆H₁₂-,-C₄H₇(C₄H₉)C₄H₈-, C₁₈H₃₆-, an 1,4-trans-cyclohexylene group, -C₂H₄-OCO-C₂H₄-, -C₂H₄-OCO-, -C₂H₄-O-C₅H₁₀-, -CH₂-O-C₅H₉(C₅H₁₁)-, -C₂H₄-CONH-C₂H₄-,-C₄H₈-OCONH-C₆H₁₂-, -CH₂-OCONHC₁₀H₂₀-, and -CH₂CH(OH)CH₂-.

When R^{y} is an arylene group having 6 to 20 carbon atoms, the number of carbon atoms of the arylene group is more preferably 6 to 18, yet more preferably 6 to 14, and particularly preferably 6 to 10. Specific examples of the arylene group denoted by R^{y} include a phenylene group, a biphenylene group, -C₆H₄-CO-C₆H₄-, and a naphthylene group.

When R^{y} is an aralkylene group having 7 to 20 carbon atoms, the number of carbon atoms of the aralkylene group is more preferably 7 to 18, yet more preferably 7 to 14, and particularly preferably 7 to 10. Specific examples of the aralkylene group denoted by R^{y} include -C₃H₆-C₆H₄-, -C₂H₄-C₆H₄-C₆H₄-,-CH₂-C₆H₄-C₆H₄-C₂H₄-, and -C₂H₄-OCO-C₆H₄-.

Examples of hydrophilic groups denoted by A in Formula (3) include the hydrophilic groups described above, and preferred ranges are also the same.

When the specific copolymer has a monomer unit represented by Formula (3), the content of the monomer unit represented by Formula (3) in the specific copolymer is as follows.

When the hydrophilic group A in Formula (3) is an ionic hydrophilic group, the content of the monomer unit represented by Formula (3) is preferably 5 mass% to 50 mass% of the specific copolymer, more preferably 5 mass% to 40 mass%, and particularly preferably 5 mass% to 20 mass%.

When hydrophilic group A in Formula (3) is a nonionic hydrophilic group, it is preferably 20 mass% to 95 mass% of the specific copolymer, more preferably 30 mass% to 80 mass%, and yet more preferably 30 mass% to 70 mass%.

The monomer unit represented by Formula (3) is preferably derived from a monomer represented by Formula (3') below. Due to these monomers being contained as a copolymerization component, the monomer unit (a-2) is introduced into the specific copolymer.

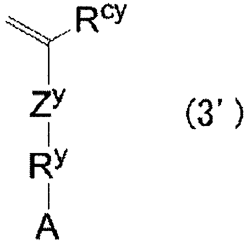

R^{cy}, Z^{y}, R^{y} and A in Formula (3') have the same meanings as those of R^{cy}, Z^{y}, R^{y} and A in Formula (3), respectively, and preferred ranges are also the same.

Preferred examples of monomers represented by Formula (3') include the monomer compounds listed below, but the present invention should not be construed as being limited thereto.

Specific examples include methoxypolyethylene glycol (meth)acrylate, polyethylene glycol (meth)acrylate, polypropylene glycol (meth)acrylate, poly(ethylene glycol-co-propylene glycol) (meth)acrylate, 2-hydroxyethyl (meth)acrylate, glycerol (meth)acrylate, (meth)acryloyloxyethyl ethylene urea, vinylpyrrolidone, 3-(meth)acryloyloxy-γ-butyrolactone, acrylamide, *tert-*butylacrylamide, *N,N*-dimethyl(meth)acrylamide, diacetone acrylamide, (meth)acrylic acid, sodium (meth)acrylate, potassium (meth)acrylate, tetrabutylammonium (meth)acrylate, mono(meth)acryloyloxyethylsuccinic acid, sodium mono(meth)acryloyloxyethylsuccinate, sodium mono(meth)acryloyloxyethylphthalate, (meth)acryloyloxyethyl acid phosphate, sodium 2-acrylamido-2-methylpropanesulfonate, 2-acrylamido-2-methylpropanesulfonic acid, styrenesulfonic acid, sodium styrenesulfonate, and vinylbenzoic acid.

Among them, (meth)acrylic acid and salts thereof is preferable, and methacrylic acid and a salt thereof is more preferable. As a counter salt, an alkali metal salt is preferable, a sodium salt or a potassium salt is more preferable, and a sodium salt is yet more preferable.

As the monomer represented by Formula (3'), a commercial compound may be used as well as one produced by a generally known common method.

Furthermore, in the present invention, other than the monomer represented by Formula (3'), an unsaturated dicarboxylic acid or an anhydride thereof such as maleic acid, maleic anhydride, or fumaric acid, or a dicarboxylate derived therefrom may also be preferably used.

Among them, the monomer unit (a-2) having a hydrophilic group is preferably a monomer unit derived from (meth)acrylic acid or a salt thereof, more preferably a monomer unit derived from (meth)acrylic acid, and particularly preferably a monomer unit derived from methacrylic acid.

A preferred content of the monomer unit having a hydrophilic group in the specific copolymer depends on the type of hydrophilic group, but it is preferably a content that makes the specific copolymer water-soluble.

The specific copolymer exhibiting water-solubility referred to here means that the specific copolymer dissolves to the extent of at least 3 mass% in water at 25°C.

The content of the monomer unit (a-2) in the specific copolymer is preferably 5 mass% to 45 mass%, preferably 8 mass% to 25 mass%, more preferably 10 mass% to 23 mass%, and yet more preferably 10 mass% to 20 mass%.

Due to the content of the monomer unit (a-2) being in this range, the polarity of the specific copolymer can be maintained appropriately, and desirable water resistance can be obtained.

The specific copolymer may comprise only one type of monomer unit (a-2) having a hydrophilic group or may comprise two or more types thereof. When the monomer unit (a-2) having a hydrophilic group has an ionic hydrophilic group, its state naturally changes according to the pH of the ink composition; for example, when a carboxyl group is contained as the hydrophilic group, the carboxyl group and a salt thereof are present at the same time depending on the pH of the ink composition.

### (Hydrophobic monomer unit (a-3))

The specific copolymer preferably comprises a hydrophobic monomer unit (a-3) (hereinafter, also simply called a 'monomer unit (a-3)'). The hydrophobic monomer unit referred to here is a monomer unit other than the monomer unit (a-1) having a partial structure represented by Formula (1) and the monomer unit (a-2) having a hydrophilic group, and is a monomer unit not having a hydrophilic group.

Due to the hydrophobic monomer unit being contained, the polarity of the specific copolymer can be maintained appropriately, and an ink image formed by the ink composition has excellent water resistance as well as excellent adhesion to a non-absorbing recording medium.

With regard to the hydrophobic monomer unit (a-3), the solubility of a homopolymer formed only from the monomer unit (a-3) having a weight-average molecular weight of at least 10,000 is preferably less than 1.0 mass%.

As the hydrophobic monomer unit, a monomer unit derived from a monomer selected from a styrene, a vinyl ether, and an alkyl or aralkyl ester of (meth)acrylic acid is suitably used, and an alkyl ester of (meth)acrylic acid is more preferable.

Among them, from the viewpoint of adjusting the polarity of the specific copolymer in an appropriate range, the alkyl group of the alkyl ester preferably has 1 to 30 carbon atoms, more preferably 2 to 24 carbon atoms, and yet more preferably 3 to 18 carbon atoms. The alkyl group may be substituted or unsubstituted. Examples of the substituent include an aryl group, an aryloxy group, and an alkoxy group, and an aryl group or an alkoxy group is preferable. The alkyl group is preferably unsubstituted.

The alkyl group may be straight-chain, branched, or cyclic.

Furthermore, the hydrophobic monomer unit (a-3) may be, as described above, a monomer unit derived from an aralkyl ester or aryloxyalkyl ester of (meth)acrylic acid, the ester having a benzyl group or phenoxyethyl group, which is an alkyl group substituted with an aryl group or aryloxy group. In the case of an aralkyl ester, the number of carbon atoms of the aralkyl group is preferably 6 to 30, more preferably 6 to 24, yet more preferably 6 to 18, and particularly preferably 7 to 12. In the case of an aryloxyalkyl ester, the number of carbon atoms of the aryloxyalkyl group is preferably 6 to 30, more preferably 6 to 24, yet more preferably 6 to 18, and particularly preferably 8 to 12.

Furthermore, the total number of carbon atoms of the (meth)acrylic acid ester is preferably 4 to 22, more preferably 5 to 20, and yet more preferably 5 to 18.

The hydrophobic monomer unit (a-3) that can be contained in the specific copolymer related to the present invention is preferably a monomer unit derived from a hydrophobic monomer (a'-3), which is illustrated below. Examples of the hydrophobic monomer include (meth) acrylic esters such as methyl (meth)acrylate, ethyl (meth)acrylate, *n*-propyl (meth)acrylate, isopropyl (meth)acrylate, *n*-butyl (meth)acrylate, isobutyl (meth)acrylate, *t*-butyl (meth)acrylate, *n*-hexyl (meth)acrylate, 2-ethylhexyl (meth)acrylate, octyl (meth)acrylate, decyl (meth)acrylate, dodecyl (meth)acrylate, stearyl (meth)acrylate, cyclohexyl (meth)acrylate, isobornyl (meth)acrylate, benzyl (meth)acrylate, phenoxyethyl (meth)acrylate, etc., styrenes such as styrene, α-methylstyrene, 4-methylstyrene, etc., vinyl ethers such as chloroethyl vinyl ether, etc. Among them, (meth)acrylic esters having a total of 4 to 22 carbon atoms, and substituted by an alkyl group such as *n*-propyl (meth)acrylate, isopropyl (meth)acrylate, *n*-butyl (meth)acrylate, isobutyl (meth)acrylate, *t*-butyl (meth)acrylate, *n*-hexyl (meth)acrylate, 2-ethylhexyl (meth)acrylate, octyl (meth)acrylate, decyl (meth)acrylate, dodecyl (meth)acrylate, stearyl (meth)acrylate, cyclohexyl (meth)acrylate are preferable. *n*-Propyl (meth)acrylate, isopropyl (meth)acrylate, *n*-butyl (meth)acrylate, isobutyl (meth)acrylate, *t*-butyl (meth)acrylate, *n*-hexyl (meth)acrylate, 2-ethylhexyl (meth)acrylate, octyl (meth)acrylate, cyclohexyl (meth)acrylate, isobornyl (meth)acrylate, benzyl (meth)acrylate, and phenoxyethyl (meth)acrylate are more preferable. Furthermore, *n*-butyl (meth)acrylate, isobutyl (meth)acrylate, *t*-butyl (meth)acrylate, cyclohexyl (meth)acrylate, isobornyl (meth)acrylate, 2-ethylhexyl (meth)acrylate, and phenoxyethyl (meth)acrylate are yet more preferable, and *n*-butyl (meth)acrylate, isobutyl (meth)acrylate, *t*-butyl (meth)acrylate, cyclohexyl (meth)acrylate, isobornyl (meth)acrylate are particularly preferable.

Among them, the hydrophobic monomer unit (a-3) preferably comprises a monomer unit derived from an alkyl ester of (meth)acrylic acid in which the total number of carbon atoms of the alkyl group is 1 to 30 carbon atoms, more preferably comprises a monomer unit derived from an alkyl ester of (meth)acrylic acid in which the number of carbon atoms of the alkyl group is 2 to 24 carbon atoms, yet more preferably comprises a monomer unit derived from an alkyl ester of (meth)acrylic acid in which the number of carbon atoms of the alkyl group is 3 to 18 carbon atoms, and particularly preferably comprises a monomer unit derived from an alkyl ester of (meth)acrylic acid in which the number of carbon atoms of the alkyl group is 4 to 18 carbon atoms. The alkyl group is preferably an unsubstituted alkyl group and may be any of straight-chain, branched, or cyclic, but is preferably a straight-chain or branched alkyl group. Furthermore, it is preferable for the monomer unit to be contained at at least 30 mass% of the hydrophobic monomer unit (a-3), more preferably at least 50 mass%, yet more preferably at least 65 mass%, particularly preferably at least 80 mass%, and most preferably at least 90 mass%.

The specific copolymer may comprise only one type of monomer unit (a-3) or may comprise two or more types.

From the viewpoint of decreasing the polarity of the specific copolymer, the hydrophobic monomer unit (a-3) is preferably in the range of 5 mass% to 72 mass% in the specific copolymer, more preferably 20 mass% to 65 mass%, and most preferably 25 mass% to 60 mass%.

### (SP value of specific copolymer)

In the present invention, the specific copolymer preferably has an SP value of 20.7 MPa^{1/2} to 23.0 MPa^{1/2}, more preferably 21.2 MPa^{1/2} to 22.8 MPa^{1/2}, and yet more preferably 21.5 MPa^{1/2} to 22.5 MPa^{1/2}.

In the present invention, the 'SP value' means 'solubility parameter value'. The SP value referred to in the present invention is a solubility parameter calculated using the Okitsu method ('Secchaku (Adhesion)' Vol. 38, No. 6, page 6 (1994), Koubunshi Kankoukai) and denotes an estimated value, proposed by Okitsu, given from a molar attraction constant and a molar volume per unit molecule structure. When calculating the SP value for a polymer, calculation is carried out on the basis of the carboxylic acid in (meth)acrylic acid being in an unneutralized state, and the SP value in the present invention employs a value obtained by this method.

SP values for representative monomer units used in the present invention are listed below. The figures inside parentheses after the monomer names are SP values with units of MPa^{1/2}.

Monomer 1 below (24.41), Monomer 2 below (23.22), Monomer 3 below (22.75), methacrylic acid (24.02), 2-hydroxyethyl methacrylate (22.89), 2-hydroxyethyl acrylamide (32.87), methyl methacrylate (19.5), *n*-butyl methacrylate (18.33), isobutyl methacrylate (17.76), *t*-butyl methacrylate (17.97), 2-ethylhexyl methacrylate (17.30), stearyl methacrylate (17.08), 2-hydroxyethyl methacrylate (22.89), tetrahydrofurfuryl methacrylate (21.29), cyclohexyl methacrylate (18.79), benzyl methacrylate (20.21), 2-phenoxyethyl methacrylate (20.23), and isobornyl methacrylate (18.09).

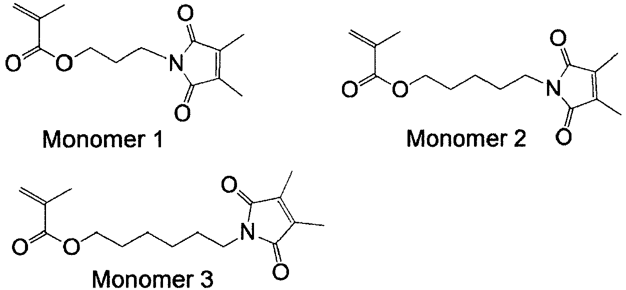

The ink composition of the present invention can form an ink image having excellent water resistance and excellent solvent resistance because it comprises a specific copolymer comprising each of the constituent units above.

When the specific copolymer uses a non-crosslinkable polymer that does not have a monomer unit (a-1) having a partial structure represented by Formula (1), it is difficult to achieve a balance between water resistance and solvent resistance by adjustment of polarity. However, since the ink composition of the present invention comprises the monomer unit (a-1) having a partial structure represented by Formula (1) in the specific copolymer, both a crosslinking effect and an insolubilization effect due to polarity can be achieved. Because of this, a balance can be achieved between the effects of water resistance and solvent resistance. Furthermore, controlling the polarity (SP value) of the specific copolymer in a specific range enables an ink composition having better adhesion to a recording medium to be obtained.

The weight-average molecular weight of the specific copolymer contained in the ink composition of the present invention is at least 5,000; it is preferably in the range of 5,000 to 150,000 from the viewpoint of water resistance, and more preferably in the range of 5,000 to 100,000 from the viewpoint of improving discharge properties.

Weight-average molecular weight may be measured by a gel permeation chromatograph (GPC). The GPC employs an HLC-8020GPC (Tosoh Corporation) and uses, as columns, a TSKgel SuperHZM-H, a TSKgel SuperHZ4000, and a TSKgel SuperHZ200 (Tosoh Corporation, 4.6 mm ID × 15 cm) and, as an eluent, THF (tetrahydrofuran), and measurement is carried out with the column oven set at a temperature of 40°C. Calculation of molecular weight employs a polystyrene standard.

Specific examples of the specific copolymer that can be used in the present invention (compound examples (A-1) to (A-24)) are shown below in the form of the starting monomers constituting the monomer units contained in the specific copolymer, their content on a mass basis, and the weight-average molecular weight of the specific copolymer obtained, but the present invention should not be construed as being limited thereto. The 'SP values' given in Table 1 below are SP values of the specific copolymers, and are values obtained by the measurement method or the calculation method described above. Furthermore, '-' denotes that the corresponding component is not contained.

**(Table 1)**

| | (a-1) | | (a-2) | | | | (a-3) | | | | | | Mw | SP value (MPa^{1/2}) |
|---|---|---|---|---|---|---|---|---|---|---|---|---|---|---|
| | Name | (%) | Name | (%) | Name | (%) | Name | (%) | Name | (%) | Name | (%) | | |
| A-1 | Monomer 1 | 50 | MAA | 9 | MAA-Na | 7 | - | - | BMA | 34 | - | - | 72,300 | 22.3 |
| A-2 | Monomer 1 | 40 | MAA | 6 | MAA-Na | 6 | - | - | iBMA | 48 | - | - | 83,500 | 21.2 |
| A-3 | Monomer 1 | 50 | MAA | 9 | MAA-Na | 7 | - | - | BMA | 24 | tBMA | 10 | 79,400 | 22.2 |
| A-4 | Monomer 1 | 60 | MAA | 9 | MAA-Na | 7 | - | - | BMA | 24 | - | - | 61,500 | 22.9 |
| A-5 | Monomer 1 | 40 | MAA | 9 | MAA-Na | 7 | - | - | tBMA | 44 | - | - | 45,700 | 21.5 |
| A-6 | Monomer 1 | 60 | MAA | 9 | MAA-Na | 7 | - | - | BMA | 24 | - | - | 37,600 | 22.2 |
| A-7 | Monomer 1 | 40 | MAA | 6 | MAA-Na | 6 | HEMA | 8 | tBMA | 40 | - | - | 96,000 | 21.7 |
| A-8 | Monomer 1 | 40 | MAA | 6 | MAA-Na | 6 | HEAA | 8 | tBMA | 40 | - | - | 43,000 | 22.5 |
| A-9 | Monomer 1 | 30 | MAA | 7 | MAA-Na | 7 | - | - | tBMA | 56 | - | - | 83,000 | 20.8 |
| A-10 | Monomer 1 | 40 | MAA | 9 | MAA-Na | 7 | - | - | CyHMA | 44 | - | - | 70,100 | 21.9 |
| A-11 | Monomer 1 | 40 | MAA | 9 | MAA-Na | 7 | - | - | BMA | 20 | PEMA | 24 | 72,300 | 22.1 |
| A-12 | Monomer 1 | 50 | MAA | 9 | MAA-Na | 7 | - | - | tBMA | 24 | C18MA | 10 | 62,000 | 22.1 |
| A-13 | Monomer 1 | 20 | MAA | 9 | MAA-Na | 7 | - | - | tBMA | 40 | PEMA | 24 | 83,000 | 20.8 |
| A-14 | Monomer 1 | 70 | MAA | 6 | MAA-Na | 6 | - | - | tBMA | 18 | - | - | 73,000 | 22.9 |
| A-15 | Monomer 1 | 40 | MAA | 9 | MAA-Na | 7 | - | - | IBOMA | 44 | - | - | 51,900 | 21.6 |
| A-16 | Monomer 3 | 40 | MAA | 9 | MAA-Na | 7 | - | - | BMA | 44 | - | - | 46,000 | 21.0 |
| A-17 | Monomer 1 | 50 | MAA | 9 | MAA-Na | 7 | - | - | BMA | 24 | tBMA | 10 | 53,000 | 22.4 |
| A-18 | Monomer 1 | 50 | MAA | 9 | MAA-Na | 7 | - | - | BMA | 24 | BnMA | 10 | 71,300 | 22.5 |
| A-19 | Monomer 1 | 38 | MAA | 2 | MAA-Na | 10 | - | - | tBMA | 50 | - | - | 38,000 | 21.1 |
| A-20 | Monomer 1 | 50 | MAA | 6 | MAA-Na | 6 | - | - | tBMA | 38 | - | - | 11,500 | 21.9 |
| A-21 | Monomer 1 | 50 | MAA | 9 | MAA-Na | 7 | - | - | EHMA | 14 | tBMA | 20 | 69,800 | 22.1 |
| A-22 | Monomer 1 | 60 | MAA | 9 | MAA-Na | 7 | - | - | EHMA | 24 | - | - | 83,800 | 22.6 |
| A-23 | Monomer 1 | 60 | MAA | 4 | MAA-Na | 8 | - | - | BMA | 28 | - | - | 61,500 | 22.7 |
| A-24 | Monomer 2 | 40 | MAA | 9 | MAA-Na | 7 | - | - | BMA | 44 | - | - | 46,500 | 21.2 |

The abbreviations in Table 1 are as follows.
MAA: methacrylic acid (Wako Pure Chemical Industries, Ltd.)
MAA-Na: methacrylic acid sodium salt (formed by neutralizing a polymer copolymerized with methacrylic acid)
BMA: *n*-butyl methacrylate (Wako Pure Chemical Industries, Ltd.)
iBMA: isobutyl methacrylate (Wako Pure Chemical Industries, Ltd.)
tBMA: *tert*-butyl methacrylate (Wako Pure Chemical Industries, Ltd.)
IBOMA: isobornyl methacrylate (Wako Pure Chemical Industries, Ltd.)
C18MA: octadecyl methacrylate (Wako Pure Chemical Industries, Ltd.)
CyHMA: cyclohexyl methacrylate (Wako Pure Chemical Industries, Ltd.)
PEMA: phenoxyethyl methacrylate (NK ester PHE-1 G, Shin-Nakamura Chemical Co., Ltd.)
EHMA: 2-ethylhexyl methacrylate (Wako Pure Chemical Industries, Ltd.)
BnMA: benzyl methacrylate (Wako Pure Chemical Industries, Ltd.)

In the present invention, the specific copolymer may be obtained by polymerization of for example a monomer for forming the monomer unit (a-1) having a partial structure represented by Formula (1), a monomer for forming the monomer unit (a-2) having a hydrophilic group, and a monomer for forming the monomer unit (a-3) having a hydrophobic group by a known polymerization method, followed if necessary by neutralization of an acidic group with an alkali metal hydroxide, etc. Specifically, the specific copolymer may be produced by a method in accordance with a polymerization method described in for example JP-A-52-988, JP-A-55-154970, Langmuir Vol. 18, No. 14, pp. 5414 to 5421 (2002), etc.

In the present invention, the content of the specific copolymer is preferably 1 to 40 mass% of the entire ink composition, more preferably 2 to 30 mass%, and yet more preferably 3 to 20 mass%. It is preferable for the content to be in this range since discharge properties are excellent and an image obtained has excellent film strength and stretchability.

### (Component B) Water

The ink composition of the present invention comprises (Component B) water.

It is preferable to use ion-exchanged water or distilled water having no impurities as (Component B) water.

The content of water in the ink composition of the present invention is preferably 10 to 97 mass%, more preferably 30 to 95 mass%, and yet more preferably 50 to 85 mass%.

It is preferable for the content of water to be in this range since discharge properties are excellent, and an image having excellent film strength and stretchability is obtained.

### (Component C) Pigment

The ink composition of the present invention comprises (Component C) a pigment. The pigment can be contained in the ink composition as a pigment dispersion. It is preferable to use the pigment dispersion from the viewpoint of solvent resistance. With regard to the pigment dispersion, a self-dispersed pigment can also be used as well as one in which the pigment is dispersed with the pigment dispersant.

With regard to the pigments, there is no particular limitation, and any generally available organic pigment and inorganic pigment, resin particles dyed with a dye, etc. may be used. Furthermore, any commercial pigments can be used, and a commercial pigment dispersion or a surface-treated pigment such as, for example, a dispersion of a pigment in an insoluble resin, etc. as a dispersion medium or a pigment having a resin grafted on the surface, etc. may be used as long as the effects of the present invention are not impaired.

Examples of these pigments include pigments described in, for example, 'Ganryo no Jiten (Pigment Dictionary)', Ed. by Seishiro Ito (2000), W. Herbst, K. Hunger, Industrial Organic Pigments, JP-A-2002-12607, JP-A-2002-188025, JP-A-2003-26978, and JP-A-2003-342503.

Specific examples of the organic pigment and the inorganic pigment that can be used in the present invention include, as those exhibiting a yellow color, monoazo pigments such as C.I. Pigment Yellow 1 (Fast Yellow G, etc.) and C.I. Pigment Yellow 74, disazo pigments such as C.I. Pigment Yellow 12 (Disazo Yellow, etc.), C.I. Pigment Yellow 17, C.I. Pigment Yellow 97, C.I. Pigment Yellow 3, C.I. Pigment Yellow 16, C.I. Pigment Yellow 83, C.I. Pigment Yellow 155, and C.I. Pigment Yellow 219, azo lake pigments such as C.I. Pigment Yellow 100 (Tartrazine Yellow Lake, etc.), condensed azo pigments such as C.I. Pigment Yellow 95 (Azo Condensation Yellow, etc.), C.I. Pigment Yellow 93, C.I. Pigment Yellow 94, C.I. Pigment Yellow 128, and C.I. Pigment Yellow 166, acidic dye lake pigments such as C.I. Pigment Yellow 115 (Quinoline Yellow Lake, etc.), basic dye lake pigments such as C.I. Pigment Yellow 18 (Thioflavine Lake, etc.), anthraquinone pigments such as C.I. Pigment Yellow 24 (Flavanthrone Yellow), isoindolinone pigments such as Isoindolinone Yellow 3RLT (Y-110), quinophthalone pigments such as C.I. Pigment Yellow 138 (Quinophthalone Yellow), isoindoline pigments such as C.I. Pigment Yellow 138 (Isoindoline Yellow), nitroso pigments such as C.I. Pigment Yellow 153 (Nickel Nitroso Yellow, etc.), metal complex azomethine pigments such as C.I. Pigment Yellow 117 (Copper Azomethine Yellow, etc.), acetolone pigments such as C.I. Pigment Yellow 120 (benzimidazolone yellow), C.I. Pigment Yellow 151, C.I. Pigment Yellow 154, C.I. Pigment Yellow 175, C.I. Pigment Yellow 180, C.I. Pigment Yellow 181, and C.I. Pigment Yellow 194, and nickel azo pigments such as C.I. Pigment Yellow 150. Among them, C.I. Pigment Yellow 74, C.I. Pigment Yellow 120, C.I. Pigment Yellow 150, C.I. Pigment Yellow 151, C.I. Pigment Yellow 154, C.I. Pigment Yellow 155, and C.I. Pigment Yellow 180 are preferably used.

Examples of pigments exhibiting a red or magenta color include monoazo pigments such as C.I. Pigment Red 3 (Toluidine Red, etc.), β-naphthol pigments such as C.I. Pigment Red 1, C.I. Pigment Red 4, and C.I. Pigment Red 6, disazo pigments such as C.I. Pigment Red 38 (Pyrazolone Red B, etc.), azo lake pigments such as C.I. Pigment Red 53:1 (Lake Red C, etc.), C.I. Pigment Red 57:1 (Brilliant Carmine 6B), C.I. Pigment Red 52:1 and C.I. Pigment Red 48 (β-oxynaphthoic acid lake, etc.), condensed azo pigments such as C.I. Pigment Red 144 (Azo Condensation Red, etc.), C.I. Pigment Red 166, C.I. Pigment Red 220, C.I. Pigment Red 214, C.I. Pigment Red 221, and C.I. Pigment Red 242, acidic dye lake pigments such as C.I. Pigment Red 174 (Phloxine B Lake, etc.) and C.I. Pigment Red 172 (erythrosine lake, etc.), basic dye lake pigments such as C.I. Pigment Red 81 (Rhodamine 6G' Lake, etc.), anthraquinone pigments such as C.I. Pigment Red 177 (Dianthraquinonyl Red, etc.), thioindigo pigments such as C.I. Pigment Red 88 (Thioindigo Bordeaux, etc.), perinone pigments such as C.I. Pigment Red 194 (Perinone Red, etc.), perylene pigments such as C.I. Pigment Red 149 (Perylene Scarlet, etc.), C.I. Pigment Red 179, C.I. Pigment Red 178, C.I. Pigment Red 190, C.I. Pigment Red 224, C.I. Pigment Red 123, and C.I. Pigment Red 224, quinacridone pigments such as C.I. Pigment violet 19 (unsubstituted quinacridone), C.I. Pigment Red 122 (Quinacridone Magenta, etc.), C.I. Pigment Red 262, C.I. Pigment Red 207, and C.I. Pigment Red 209, quinacridone pigments which are solid solutions of plurality of the above-mentioned quinacridone pigments, isoindolinone pigments such as C.I. Pigment Red 180 (Isoindolinone Red 2BLT, etc.), alizarin lake pigments such as C.I. Pigment Red 83 (Madder Lake, etc.), naphthone pigments such as C.I. Pigment Red 171, C.I, Pigment Red 175, C.I. Pigment Red 176, C.I. Pigment Red 185, and C.I. Pigment Red 208, naphthol AS type lake pigments such as C.I. Pigment Red 247, naphthol AS pigments such as C.I. Pigment Red 2, C.I. Pigment Red 5, C.I. Pigment Red 21, C.I. Pigment Red 170, C.I. Pigment Red 187, C.I. Pigment Red 256, C.I. Pigment Red 268, and C.I. Pigment Red 269, diketopyrrolopyrrole pigments such as C.I. Pigment Red 254, C.I. Pigment Red 255, C.I. Pigment Red 264, and C.I. Pigment Red 27. Among them, quinacridone pigments such as C.I. Pigment violet 19 (unsubstituted quinacridone), C.I. Pigment Red 122 (Quinacridone Magenta, etc.), C.I. Pigment Red 262, C.I. Pigment Red 207, and C.I. Pigment Red 209, and a quinacridone pigment which is a solid solution of plurality of the above-mentioned quinacridone pigments are preferable.

Examples of pigments exhibiting a blue or cyan color include disazo pigments such as C.I. Pigment Blue 25 (Dianisidine Blue, etc.), phthalocyanine pigments such as C.I. Pigment Blue 15, C.I. Pigment Blue 15:1, C.I. Pigment Blue 15:2, C.I. Pigment Blue 15:3, C.I. Pigment Blue 15:4, C.I. Pigment Blue 15:6 and C.I. Pigment Blue 16 (Phthalocyanine Blue, etc.), acidic dye lake pigments such as C.I. Pigment Blue 24 (Peacock Blue Lake, etc.), basic dye lake pigments such as C.I. Pigment Blue 1 (Victoria Pure Blue BO Lake, etc.), anthraquinone pigments such as C.I. Pigment Blue 60 (Indanthrone Blue, etc.), and alkali blue pigments such as C.I. Pigment Blue 18 (Alkali Blue V-5:1). Among them, copper phthalocyanine pigments such as C.I. Pigment Blue 15, C.I. Pigment Blue 15:1, C.I. Pigment Blue 15:2, C.I. Pigment Blue 15:3, C.I. Pigment Blue 15:4, C.I. Pigment Blue 15:6, etc. are preferable.

Examples of pigments exhibiting a green color include phthalocyanine pigments such as C.I. Pigment Green 7 (Phthalocyanine Green) and C.I. Pigment Green 36 (Phthalocyanine Green), and azo metal complex pigments such as C.I. Pigment Green 8 (Nitroso Green) and C.I. Pigment Green 10.

Examples of pigments exhibiting an orange color include isoindoline pigments such as C.I. Pigment Orange 66 (Isoindoline Orange), anthraquinone pigments such as C.I. Pigment Orange 51 (Dichloropyranthrone Orange), β-naphthol pigments such as C.I. Pigment Orange 2, C.I. Pigment Orange 3, and C.I. Pigment Orange 5, naphthol AS pigments such as C.I. Pigment Orange 4, C.I. Pigment Orange 22, C.I. Pigment Orange 24, C.I. Pigment Orange 38, and C.I. Pigment Orange 74, isoindolinone pigments such as C.I. Pigment Orange 61, perynone pigments such as C.I. Pigment Orange 43, disazo pigments such as C.I. Pigment Orange 15 and C.I. Pigment Orange 16, qunacridone pigments such as C.I. Pigment Orange 48 and C.I. Pigment Orange 49, acetolone pigments such as C.I. Pigment Orange 36, C.I. Pigment Orange 62, C.I. Pigment Orange 60, C.I. Pigment Orange 64, and C.I. Pigment Orange 72, and pyrazolone pigments such as C.I. Pigment Orange 13 and C.I. Pigment Orange 34.

Examples of pigments exhibiting a brown color include naphthrone pigments such as C.I. Pigment Brown 25 and C.I. Pigment Brown 32.

Examples of pigments exhibiting a black color include indadine pigments such as carbon black (C.I. Pigment Black 7), titanium black, C.I. Pigment Black 1 (aniline black), and perylene pigments such as C.I. Pigment Black 31 and C.I. Pigment Black 32. Among them, C.I. Pigment Black 7 is preferable.

Specific examples of white pigments that can be used include basic lead carbonate (2PbCO₃Pb(OH)₂, also known as silver white), zinc oxide (ZnO, also known as zinc white), titanium oxide (TiO₂, also known as titanium white), and strontium titanate (SrTiO₃, also known as titan strontium white). Among them, titanium oxide is preferable. An inorganic particle used for a white pigment may be an elemental material, or a composite particle with an oxide of silicon, aluminum, zirconium, or titanium, or an organic metal compound, and an organic compound.

Here, titanium oxide, compared to other white pigments, has a less specific gravity and a greater refractive index, is chemically and physically stable, has a greater concealing and coloring power as a pigment, and furthermore has a superior durability against acid, alkali, and other environment. Therefore, the titanium oxide is preferably used as a white pigment. Of course, other white pigments (may be other than the above-mentioned white pigments) may be used as necessary.

Since the coloring property is more excellent as the average particle diameter is smaller for the pigment other than that of white color, in a case of applying the pigment dispersion of the invention to a pigment dispersion other than that of the white color, the average particle diameter of the pigment contained in the pigment dispersion is preferably about 0.01 µm to 0.4 µm, and more preferably form 0.02 µm to 0.3 µm.

Further, the maximum particle diameter of the pigment is preferably 3 µm or less, and more preferably 1 µm or less. The particle diameter of the pigment can be controlled, for example, by selecting the pigment, the dispersing agent, and the dispersion medium, and setting dispersion conditions and filtration conditions. Furthermore, in a case of preparing the ink composition of the present invention as a white ink composition, the average particle diameter of the pigment contained in the pigment dispersion is preferably about 0.05 µm to 1.0 µm, and more preferably about 0.1 µm to 0.4 µm, from a view point of providing a sufficient concealing power. Also for the case of preparing the white pigment dispersion, the maximum particle diameter of the pigment is preferably 3 µm or less, and more preferably 1 µm or less.

### (Dispersant)

When pigment particles are prepared, a pigment dispersant may be used if necessary. Examples of the pigment dispersant which may be used include surfactants such as higher fatty acid salts, alkyl sulfate salts, alkyl ester sulfate salts, alkyl sulfonate salts, sulfosuccinic acid salts, naphthalene sulfonate salts, alkyl phosphate salts, polyoxyalkylene alkyl ether phosphate salts, polyoxyalkylene alkyl phenyl ether, polyoxyethylene polyoxypropylene glycol, glycerin ester, sorbitan ester, polyoxyethylene fatty acid amide, or amine oxide; and block copolymers, random copolymers, and salts thereof formed from at least two types of monomers selected from the group consisting of styrene, a styrene derivative, a vinyl naphthalene derivative, acrylic acid, an acrylic acid derivative, maleic acid, a maleic acid derivative, itaconic acid, an itaconic acid derivative, fumaric acid, and a fumaric acid derivative.

The ink composition of the invention may use a self-dispersive pigment. A "self-dispersive pigment" as used in the present invention refers to a pigment capable of being dispersed without a dispersant, and is preferably a pigment particle having a polar group on a surface thereof.

A pigment particle having a polar group on a surface thereof (hereinbelow, may be referred to as "pigment derivative") as used in the present invention refers to a pigment obtained by directly modifying a surface of a pigment particle with a polar group, or an organic compound having an organic pigment nucleus having a polar group which is directly bonded thereto or bonded thereto via a joint.

Examples of the polar group include a sulfonic acid group, a carboxylic acid group, a phosphoric acid group, a boric acid group, and a hydroxyl group, and a sulfonic acid group and a carboxylic acid group are preferable, and a sulfonic acid group is more preferable.

As a method for preparing pigment particles having a polar group on the surface, for example, disclosed is a method in which a surface of a pigment is oxidized with appropriate oxidant result in introducing a polar group such as a sulfonic acid group or a salt thereof at least a part on a surface of a pigment in WO 97/48769, JP-A-10-110129, JP-A-11-246807, JP-A-11-57458, JP-A-11-18739, JP-A-11-323232, and JP-A-2000-265094. Specific examples thereof include a method for preparing by oxidation of carbon black by concentrated nitric acid and in the case of color pigment, a method for preparing by oxidation by sulfamic acid, sulfonated pyridine salt or amidesulfonic acid in sulfolane or *N*-methyl-2-pyrrolidone. In these reactions, pigment dispersion can be obtained by eliminating compounds which become soluble in water due to excess oxidation, and purifying. Further, in the case of introducing sulfonic acid group by oxidation, an acid group may be neutralized by a basic compound as appropriate.

As other method, cited is a method in which a pigment derivative disclosed in JP-A-11-49974, JP-A-2000-273383, JP-A-2000-303014 each is absorbed on the surface of pigment particles by a treatment such as milling, or a method in which a pigment disclosed in JP-A-2002-179977, JP-A-2002-201401 each is solved into a solvent as well as a pigment derivative and followed by a crystallization into a poor solvent. By any method, pigment particles having polar group on the surface can be easily obtained.

A polar group present at a pigment surface may be a free group or may be in the form of a salt, or may have a counter salt. Examples of the counter salt include inorganic salts (for example, lithium, sodium, potassium, magnesium, calcium, aluminum, nickel, or ammonium) and organic salts (for example, triethylammonium, diethylammonium, pyridinium, or triethanol ammonium), and a monovalent counter salt is preferable.

The content of the pigment relative to the entire amount of the ink composition of the present invention is preferably 0.5 mass% to 10 mass%, and more preferably 0.5 mass% to 5 mass%.

When the content of the pigment is in this range, an image having high image quality is obtained.

### (Other Additives)

The ink composition of the invention may further comprise a known additive in addition to Component A to Component C which are essential components, as long as the effect of the present invention is not impaired. Hereinbelow, additives which may be used in the ink composition are described.

### (Component D) Water-soluble organic solvent

The ink composition of the invention comprises water as a main solvent, and preferably further comprises (Component D) a water-soluble organic solvent. As used herein, the water-soluble organic solvent refers to an organic solvent having a solubility in water at 25 °C of 10 mass% or more.

Examples of water-soluble organic solvent which may be used in the invention include following solvents:
alcohols such as methanol, ethanol, propanol, isopropanol, butanol, isobutanol, secondary butanol, tertiary butanol, pentanol, hexanol, cyclohexanol, benzyl alcohol, etc.;
polyhydric alcohols such as ethylene glycol, diethylene glycol, triethylene glycol, polyethylene glycol, propylene glycol, dipropylene glycol, polypropylene glycol, butylene glycol, hexanediol, pentanediol, glycerin, hexanetriol, thiodiglycol, 2-methylpropanediol, etc.;
polyhydric alcohol ethers such as ethylene glycol monomethyl ether, ethylene glycol monoethyl ether, ethylene glycol monobutyl ether, diethylene glycol monoethyl ether, diethylene glycol monomethyl ether, diethylene glycol monobutyl ether, propylene glycol monomethyl ether, propylene glycol monobutyl ether, tripropylene glycol monomethyl ether, dipropylene glycol monomethyl ether; dipropylene glycol dimethyl ether, ethylene glycol monomethyl ether acetate, triethylene glycol monomethyl ether, triethylene glycol monoethyl ether, triethylene glycol monobutyl ether, ethylene glycol monophenyl ether, propylene glycol monophenyl ether, etc.;
amines such as ethanolamine, diethanolamine, triethanolamine, *N-*methyl diethanolamine, *N*-ethyl diethanolamine, morpholine, *N*-ethylmorpholine, ethylenediamine, diethylenediamine, triethyleneteteramine, tetraethylene pentamine, polyethylene imine, pentamethyl diethylenetriamine, tetramethyl propylenediamine, etc.;
amides such as formamide, *N,N*-dimethyl formamide, *N,N*-dimethyl acetamide, methoxypropionamide, *N*-methyl methoxypropionamide, *N,N-*dimethyl methoxypropionamide, *n*-butoxypropionamide, *N*-methyl *n-*butoxypropionamide, *N,N*-dimethyl *n*-butoxypropionamide, etc.;
heterocyclic compounds such as 2-pyrrolidone, *N*-methyl-2-pyrrolidone, cyclohexylpyrrolidone, 2-oxazolidinone, 1,3-dimethyl-2-imidazolidinone, γ-butyrolactone, propylene carbonate, ethylene carbonate, ethylene urea, etc.;
sulfoxides such as dimethyl sulfoxide, etc.;
sulfones such as sulfolane, etc.; and
other compounds such as urea, acetonitrile, acetone, etc.

Preferred examples of the water-soluble organic solvent include a polyhydric alcohol ether and a heterocyclic compound, and a combination thereof may be preferably used.

Preferable examples of the polyhydric alcoholic ethers include so-called glycol ethers. Specifically, tripropylene glycol monomethyl ether, dipropylene glycol monomethyl ether, and dipropylene glycol dimethyl ether are preferable, and 2-dipropylene glycol monomethyl ether is more preferable.

Preferred examples of the heterocyclic compound include 2-pyrrolidone, γ-butyrolactone, propylene carbonate, and ethylene urea, and 2-pyrrolidone and γ-butyrolactone are particularly preferable.

It is preferable to use a solvent having a high boiling point. The boiling point at standard pressure is preferably at least 120 °C, and more preferably at least 150 °C.

With regard to the water-soluble organic solvent, one type may be used or a plurality of types may be used in combination. The amount of water-soluble organic solvent added in the ink composition is preferably 1 mass% to 60 mass% as a total amount, and more preferably 2 mass% to 35 mass%.

### <Surfactant>

The ink composition of the present invention may comprise a surfactant.

Examples of preferable surfactant include anionic surfactants such as dialkyl sulfosuccinates, alkyl naphthalene sulfonates, or fatty acid salts; nonionic surfactants such as polyoxyethylene alkyl ethers, polyoxyethylene alkyl allyl ethers, acetylene glycols, or polyoxyethylene-polyoxypropylene block copolymers; and cationic surfactants such as alkyl amine salts or quaternary ammonium salts. Among them, an anionic surfactant and a nonionic surfactant are particularly preferably used.

In the present invention, a polymer surfactant may be used. Any one of water-soluble resins mentioned below is preferably used as the polymer surfactant. Examples of water-soluble resins include styrene-acrylic acid-alkyl acrylate copolymers, styrene-acrylic acid copolymers, styrene-maleic acid-alkyl acrylate copolymers, styrene-maleic acid copolymers, styrene-methacrylic acid-alkyl acrylate copolymers, styrene-methacrylic acid copolymers, styrene-maleic acid half ester copolymers, vinylnaphthalene-acrylic acid copolymers, and vinylnaphthalene-maleic acid copolymers.

Furthermore, in the present invention, it is also possible to preferably use a polyalkylsiloxane-containing silicone-based surfactant or an alkyl fluoride group-containing fluorine-based surfactant.

When a surfactant is used in the ink composition of the present invention, it is preferable for the amount thereof added to be preferably at least 0.1 mass% but no greater than 5 mass% as a solids content amount added, and it is particularly preferable for the solids content amount of surfactant added to be at least 0.5 mass% but no greater than 2 mass%.

### <Sensitizing dye>

In the present invention, a known sensitizing dye may be used in combination. With regard to solubility, one that dissolves in distilled water at room temperature to the extent of at least 0.5 mass% is preferable, one that dissolves to the extent of at least 1 mass% is more preferable, and one that dissolves to the extent of at least 3 mass% is yet more preferable. Furthermore, as the sensitizing dye, a photopolymerization initiator formed by dispersing a water-insoluble polymerization initiator may also be used.

The sensitizing dye absorbs specific actinic radiation to attain an electronically excited state.

The sensitizing dye may employ a compound that is appropriate for the wavelength of actinic radiation. While taking into consideration its use in a curing reaction of a general ink composition, preferred examples of the sensitizing dye includes those belonging to the types of compounds below and having an absorption wavelength in the range of 350 nm to 450 nm.

Examples of the sensitizing dye include polynuclear aromatic compounds (e.g. anthracene, pyrene, perylene, triphenylene), thioxantones (e.g. isopropylthioxantone), xanthenes (e.g. fluorescein, eosin, erythrosine, rhodamine B, rose bengal), cyanines (e.g. thiacarbocyanine, oxacarbocyanine), merocyanines (e.g. merocyanine, carbomerocyanine), thiazines (e.g. thionine, methylene blue, toluidine blue), acridines (e.g. acridine orange, chloroflavin, acriflavine), anthraquinones (e.g. anthraquinone), squaryliums (e.g. squarylium), and coumarins (e.g. 7-diethylamino-4-methylcoumarin). A polynuclear aromatic compound and a thioxanthone can be cited as a preferred example, and among them a thioxanthone is preferable and isopropylthioxanthone is most preferable.

Other examples of the sensitizing dyes include *N*-[2-hydroxy-3-(3,4-dimethyl-9-oxo-9*H*-thioxanthene-2-yloxy)propyl]-*N,N,N*,-trimethyl aluminum chloride, benzophenone, 3-acyl coumalin derivatives, terphenyl, styryl ketone, 3-(aroylmethylene)thiazoline, a camphor quinone, eosin, rhodamine, and erythrosine, modified products thereof obtained by imparting water-solubility, and a dispersion thereof. Compounds represented by general formula (i) described in JP-A-2010-24276 and compounds represented by general Formula (I) described in JP-A-6-107718 are also suitably used.

### <Cosensitizer>

The ink composition of the present invention preferably comprises a cosensitizer. In the present invention, the cosensitizer has the function of further improving the sensitivity of the sensitizing dye to actinic radiation or the function of suppressing inhibition by oxygen of polymerization of a polymerizable compound, etc.

Examples of such a cosensitizer include amines such as compounds described in M. R. Sander et al., 'Journal of Polymer Society', Vol. 10, p. 3173 (1972), JP-B-44-20189, JP-A-51-82102, JP-A-52-134692, JP-A-59-138205, JP-A-60-84305, JP-A-62-18537, JP-A-64-33104, and Research Disclosure No. 33825, and specific examples thereof include triethanolamine, ethyl *p-*dimethylaminobenzoate, *p*-formyldimethylaniline, and *p-*methylthiodimethylaniline.

Other examples of the cosensitizer include thiols and sulfides such as thiol compounds described in JP-A-53-702, JP-B-55-500806, and JP-A-5-142772, and disulfide compounds of JP-A-56-75643, and specific examples thereof include 2-mercaptobenzothiazole, 2-mercaptobenzoxazole, 2-mercaptobenzimidazole, 2-mercapto-4(3*H*)-quinazoline, and β-mercaptonaphthalene.

Yet other examples of the cosensitizer include amino acid compounds (e.g. *N*-phenylglycine, etc.), organometallic compounds described in JP-B-48-42965 (e.g. tributyltin acetate, etc.), hydrogen-donating compounds described in JP-B-55-34414, sulfur compounds described in JP-A-6-308727 (e.g. trithiane, etc.), phosphorus compounds described in JP-A-6-250387 (diethylphosphite, etc.), and Si-H, Ge-H compounds described in JP-A-8-65779.

### <Polymerizable compound>

In the present invention, another polymerizable compound may be used in combination. The compound used in combination is preferably water-soluble, and from the viewpoint of stability in an aqueous solvent it is preferably a (meth)acrylamide compound, a polyvalent allyl compound, a monofunctional *N*-vinyllactam compound, or a cationic polymerizable compound, and is particularly preferably a (meth)acrylamide compound.

Polymerizable compounds that can be used in the present invention are explained in detail below.

As a polyvalent (meth)acrylamide compound, in terms of having high polymerizability and curability, a compound represented by Formula (2) below is preferable. This compound has four acrylamide groups or methacrylamide groups in the molecule as polymerizable groups. This compound also exhibits curability based on a polymerization reaction resulting from the application of energy such as heat or actinic radiation such as for example α-rays, γ-rays, X rays, UV, visible light, infrared light, or an electron beam. The compound represented by Formula (2) below exhibits water solubility and dissolves well in water or a water-soluble organic solvent such as an alcohol.

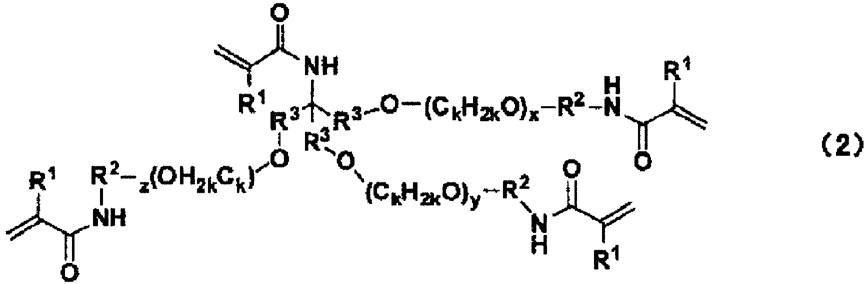

In Formula (2), R¹ independently denotes a hydrogen atom or a methyl group, and is preferably a hydrogen atom. A plurality of R¹ may be the same or different from each other.

R² independently denotes a linear or branched alkylene group having 2 to 4 carbon atoms. A plurality of R² may be the same or different from each other. R² is preferably an alkylene group having 3 to 4 carbon atoms, more preferably an alkylene group having 3 carbon atoms, and particularly preferably a linear alkylene group having 3 carbon atoms. The alkylene group of R² may also have a substituent, and examples of the substituent include an aryl group, an alkoxy group, or the like.

However, in R², the oxygen atoms and nitrogen atoms bonded to both ends of the R² do not have a structure which is bonded to the same carbon atom of R². R² is a linear or branched alkylene group linking the oxygen atoms and nitrogen atoms of the (meth)acrylamide group. Here, in a case where the alkylene group has a branched structure, it is considered that the oxygen atoms and nitrogen atoms of the (meth)acrylamide group at both ends bond to the same carbon atom in the alkylene group, and take -O-C-N-structure (hemiaminal structure); however, the compound represented by Formula (2) does not include a compound of such a structure. The compound having the -O-C-N- structure in the molecule is not preferable in terms of factors such as that, since degradation easily occurs at the position of the carbon atom, degradation easily occurs during storage, and the storage stability is decreased in a case where the ink composition contains the compound.

R³ denotes a divalent linking group, and a plurality of R³ may be the same or different from each other. Examples of the divalent linking group denoted by R³ include an alkylene group, an arylene group, a heterocyclic group, a group formed of a combination of these, or the like, and an alkylene group is preferable. Here, in a case where the divalent linking group includes an alkylene group, at least one type of group selected from -O-, -S-, and -NR⁴- may be further included in the alkylene group. R³ denotes a hydrogen atom or an alkyl group having 1 to 4 carbon atoms.

In a case where R³ includes an alkylene group, examples of the alkylene group include a methylene group, an ethylene group, a propylene group, a butylene group, a pentylene group, a hexylene group, a heptylene group, an octylene group, a nonylene group, or the like. The alkylene group of R³ preferably has 1 to 6 carbon atoms, more preferably 1 to 3, and particularly preferably 1. In the alkylene group of R³, at least one type selected from -O-, -S-, and -NR^{a}- may be further included. Examples of the alkylene group including -O- include -C₂H₄-O-C₂H₄-, -C₃H₆-O-C₃H₆-, and the like. The alkylene group of R³ may also have a substituent, and examples of the substituent include an aryl group, an alkoxy group, or the like.

In a case where R³ includes an arylene group, examples of the arylene group include a phenylene group, a napthylene group and the like, and the number of carbon atoms of R³ is preferably 6 to 14, more preferably 6 to 10, and particularly preferably 6. The arylene group of R³ may also have a substituent, and examples of the substituent include an alkyl group, an alkoxy group, or the like.

In a case where R³ includes a heterocyclic group, as the heterocyclic group, a 5-membered or 6-membered heterocyclic group is preferable, and these may be further condensed. In addition, the heterocycle may be an aromatic heterocycle or a non-aromatic heterocycle. Examples of the heterocyclic group include a residue in which two hydrogen atoms are removed from the heterocycle such as pyridine, pyrazine, pyrimidine, pyridazine, triazine, quinoline, isoquinoline, quinazoline, cinnoline, phthalazine, quinoxaline, pyrrole, indole, furan, benzofuran, thiophene, benzothiophene, pyrazole, imidazole, benzimidazole, triazole, oxazole, benzoxazole, thiazole, benzothiazole, isothiazole, benzisothiazole, thiadiazole, isoxazole, benzisoxazole, pyrrolidine, piperidine, piperazine, imidazolidine, thiazoline, and the like. Among them, an aromatic heterocyclic group is preferable, and a residue in which two hydrogen atoms are removed from the aromatic heterocycle such as pyridine, pyrazine, pyrimidine, pyridazine, triazine, pyrazole, imidazole, benzimidazole, triazole, thiazole, benzothiazole, isothiazole, benzisothiazole, and thiadiazole is preferable. Here, the heterocyclic groups given in the above description have been given in a form in which the substitution position is omitted; however, the substitution position is not limited. For example, for pyridine, substitution at the 2-position, 3-position, and 4-position is possible and it is possible to include all these substitutions.

The heterocyclic group may also have a substituent, and examples of the substituent include an alkyl group, an aryl group, and alkoxy group, or the like.

k in Formula (2) denotes 2 or 3. A plurality of k may be the same or different from each other. In addition, CₖH₂ₖ may be a linear structure or a branched structure.

In addition, x, y, and z each independently denote integers of 0 to 6, preferably integers of 0 to 5, and more preferably integers of 0 to 3, x+y+z satisfies 0 to 18, preferably satisfies 0 to 15, and more preferably satisfies 0 to 9.

Among the above-described cases, a case is preferable in which R¹ denotes a hydrogen atom or a methyl group; R² denotes an alkylene group having 2 or 4 carbon atoms; R³ denotes an alkylene group having 1 to 6 (preferably 1 to 3) carbon atoms; k denotes 2 or 3; x, y, and z each independently denote an integer of 0 to 6; and a value of x+y+z satisfies an integer of 0 to 15.

Specific examples of the compound represented by Formula (2) are shown below. However, the present invention is not limited thereto.

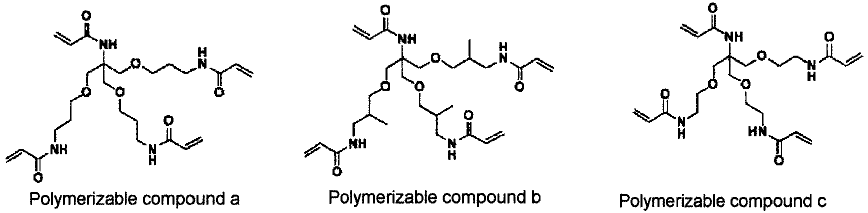

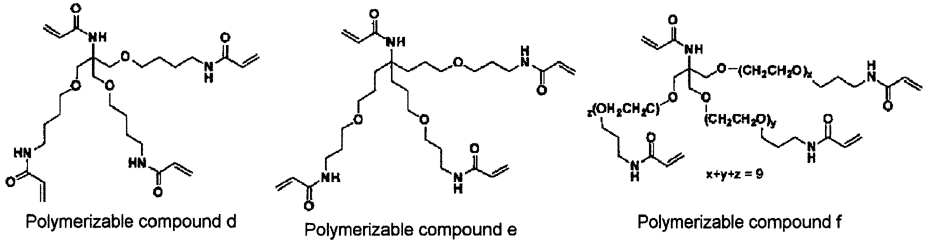

A synthetic method for the compound represented by Formula (2) is not particularly limited, and it may be synthesized by for example a method described in paragraphs 0028 to 0033 and paragraphs 0123 to 0139 of JP-A-2013-18846.

The content of the polyvalent (meth)acrylamide in the ink composition relative to the total amount of the ink composition is preferably at least 3 mass% but no greater than 15 mass%, more preferably at least 5 mass% but no greater than 12.5 mass%, and yet more preferably at least 5 mass% but no greater than 10 mass%. It is preferable for the content of the polyvalent (meth)acrylamide to be in this range since a curing reaction proceeds sufficiently, uniformity of curing over the entire image is excellent, and uniform gloss can be obtained.

In the present invention, a mode in which a polyvalent allyl compound is used in combination with the polyvalent (meth)acrylamide is also desirable.

Examples of the polyvalent allyl compound include allyl ether compounds such as trimethylolpropane diallyl ether, glycerin diallyl ether, pentaerythritol diallyl ether, pentaerythritol triallyl ether, dipentaerythritol pentaallyl ether, dipentaerythritol tetraallyl ether, and dipentaerythritol triallyl ether, alkylene oxide derivatives thereof, and triallyl isocyanurate.

In the present invention, a mode in which a monofunctional (meth)acrylamide is used in combination with the polyvalent (meth)acrylamide is also desirable. Due to the monofunctional (meth)acrylamide being contained, an ink having excellent penetrability into a pigment layer in a coated paper is obtained. This enables not only an image but also a pigment layer to be cured, thus further improving adhesion.

The polymerizable compound having an acrylamide structure in a molecule thereof is preferably a compound represented by Formula (1). 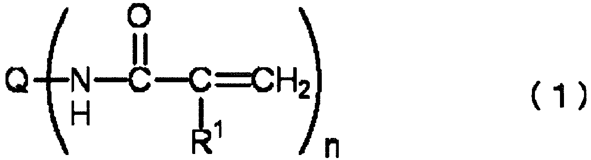 (In Formula (1), Q denotes an n-valent linking group; R¹ denotes a hydrogen atom or a methyl group; and n denotes an integer of 1 or more.)

The compound represented by Formula (1) is one in which an unsaturated vinyl monomer is bonded to the linking group Q via an amide linkage. R¹ denotes a hydrogen atom or a methyl group and is preferably a hydrogen atom. The valence n of the linking group Q is not limited and from the viewpoint of improving the polymerization efficiency and the ejection stability, n is preferably 1 to 6.

As the monofunctional (meth)acrylamide, a compound in which n = 1 in Formula (1) above can be cited. The group Q when n = 1 may be a monovalent group that can be linked to the (meth)acrylamide structure, and the group Q when n = 1 is suitably a group having water solubility.

Specific examples thereof include a residue in which one or more hydrogen atoms or hydroxyl groups are removed from the following compound group X.

Compound Group X: Polyols, such as ethylene glycol, diethylene glycol, triethylene glycol, polyethylene glycol, propylene glycol, dipropyrene glycol, tripropylene glycol, polypropylene glycol, 1,3-propanediol, 1,2-butanediol, 1,3-butanediol, 1,4-butanediol, 2,3-butanediol, 1,5-pentanediol, 1,4-pentanediol, 2,4-pentanediol, 3-methyl-1,5-pentanediol, 2-methyl-2,4-pentanediol, 1,5-hexanediol, 1,6-hexanediol, 2,5-hexanediol, glycerin, 1,2,4-butanetriol, 1,2,6-hexanetriol, 1,2,5-pentanetriol, thioglycol, trimethylolpropane, ditrimethylolpropane, trimethylolethane, ditrimethylolethane, neopentylglycol, pentaerythritol, dipentaerythritol and condensates thereof, low molecular weight polyvinyl alcohol, or sugars; and polyamines, such as ethylenediamine, diethylenetriamine, triethylenetetramine, polyethyleneimine, and polypropylenediamine.

Specific examples of the monofunctional (meth)acrylamide include the following compounds.

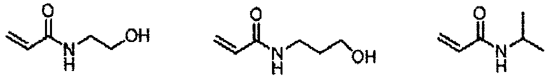

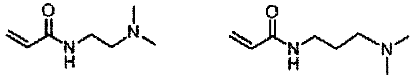

In the present invention, a mode in which a monofunctional allyl ether is used in combination with the polyvalent (meth)acrylamide is also suitable.

Examples of the monofunctional allyl ether include ethyleneglycol monoallyl ether, propyleneglycol monoallyl ether, neopentylglycol monoallyl ether, trimethylolpropane monoallyl ether, 1,2-butyleneglycol monoallyl ether, 1,3-butyleneglycol monoallyl ether, hexyleneglycol monoallyl ether, octyleneglycol monoallyl ether, pentaerythritol monoallyl ether.

Furthermore, in the present invention, a mode in which a monofunctional *N*-vinyllactam compound is used in combination with the polyvalent (meth)acrylamide is also suitable.

With regard to the *N*-vinyllactam compound, there is no particular limitation, and monofunctional *N*-vinyllactam compound (i.e., *N*-vinyllactam compound having one ethylenically unsaturated double bond) is preferable. *N*-vinyllactam compound is preferably a compound represented by Formula (A)

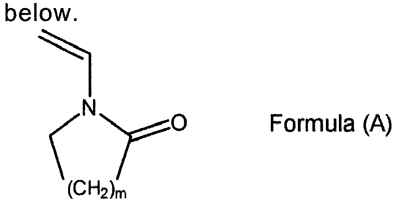

In Formula (A), m denotes an integer of 1 to 5.

m is preferably an integer of 2 to 4, and more preferably 2 or 4, from the viewpoint of flexibility after the ink composition is cured, adhesion to a recording medium, and ready availability of starting materials. That is, at least one of *N*-vinylpyrrolidone and *N*-vinylcaprolactam is preferable. *N-*Vinylcaprolactam is preferable since it has excellent safety, is commonly used and is readily available at a relatively low price, and gives particularly good ink curability and adhesion of a cured film to a recording medium.

The *N*-vinyllactam compound may have a substituent such as an alkyl group or an aryl group on the lactam ring, and may have a saturated or unsaturated ring structure bonded to the lactam ring.

With regard to the *N*-viyllactam compound, one type thereof may be used or two or more types thereof may be used in combination.

Furthermore, a cationic polymerizable compound may be used in combination with the polyvalent (meth)acrylamide. The cationic polymerizable compound is a compound having a cationic group and a polymerizable group such as an unsaturated double bond and, for example, an epoxy monomer, an oxetane monomer, etc. may suitably be used. When the cationic polymerizable compound is contained, the ink composition becomes strongly cationic due to it having a cationic group, and color mixing when an anionic ink is used can be prevented more effectively.

In the ink composition of the invention, various kinds of known additive such as a viscosity controlling agent, a surface tension controlling agent, a relative resistivity controlling agent, a film forming agent, an antiseptic agent, a dispersant, a surfactant, a UV absorber, an antioxidant, an anti-fading agent, an anti-mold agent, a rust preventive, a solid wetting agent, and silica fine particles may be added, as necessary, in addition to the foregoing materials corresponding to the purposes of improving various properties of the ink such as the ejection stability, suitability for the print head or the ink cartridge, storage stability, an image storage stability and other performances. Examples thereof include minute oil droplets of liquid paraffin, dioctyl phthalate, tricresyl phosphate, or silicone oil, UV absorbers described in JP-A-57-74193, JP-A-57-87988, and JP-A-62-261476, anti-fading agents described in JP-A-57-74192, JP-A-57-87989, JP-A-60-72785, JP-A-61-146591, JP-A-1-95091, and JP-A-3-13376, optical brightening agents described in JP-A-59-42993, JP-A-59-52689, JP-A-62-280069, JP-A-61-242871, and JP-A-4-219266, pH adjusters such as sulfuric acid, phosphoric acid, citric acid, sodium hydroxide, potassium hydroxide, potassium carbonate.

It is preferable for the ink composition of the present invention not to contain a polymerization initiator. In the present invention, Component A can undergo polymerization by a 2+2 cycloaddition reaction, and a polymerization reaction can be caused by irradiation with UV without adding a polymerization initiator. When a polymerization initiator is contained, the polymerization initiator, a cleavage product thereof, etc. remains in the cured film after curing, and the so-called migration problem, in which such low-molecular-weight compounds bleed from the cured film (image), can occur in some cases, and this causes a problem in food industry applications in particular. The content of the polymerization initiator is preferably no greater than 5 mass% of the entire ink composition, more preferably no greater than 3 mass%, yet more preferably no greater than 1 mass%, and particularly preferably none, that is, the polymerization initiator having a content of 0 mass%.

Furthermore, since unpolymerized monomer might remain in the same manner, it is preferable for the ink composition of the present invention not to contain a radically polymerizable ethylenically unsaturated monomer or a cationically polymerizable epoxy compound, oxetane compound, etc. The content of the radically polymerizable compound and cationically polymerizable compound in the ink composition is preferably no greater than 5 mass%, more preferably no greater than 3 mass%, yet more preferably no greater than 1 mass%, and particularly preferably none, that is, the radically polymerizable compound and cationically polymerizable compound having a content of 0 mass%. The radically polymerizable compound and cationically polymerizable compound having a content of no greater than 5 mass% means that the total content of a radically polymerizable ethylenically unsaturated compound and a cationically polymerizable epoxy compound and oxetane compound, etc. is no greater than 5 mass%.

Since Component A used in the present invention is thermally relatively stable and cures by irradiation with relatively short wavelength UV, the ink composition of the present invention has excellent storage stability. When the radically polymerizable compound or the cationically polymerizable compound is used in combination, there is a possibility that such characteristics will be impaired.

### (Method for preparing ink composition)

A method of preparing the ink composition of the present invention is not particularly limited, and the ink composition may be prepared by stirring, mixing, and dispersing respective components using a container-driven medium mill such as a ball mill, a centrifugal mill, or a planetary balls mill, a high-speed rotary mill such as a sand mill, a medium agitating mill such as a mixing vessel-type mill, or a simple dispersion apparatus such as a disper. The components can be added in any order. Preferably, Component C, the polymeric dispersant, and the organic solvent are pre-mixed and then dispersed, and the dispersion thus obtained is mixed with Component A and Component B. In this case, at the time of addition or after addition, the components are uniformly mixed using a simple stirring apparatus such as a three-one motor, a magnetic stirrer, a disper, or a homogenizer. Alternatively, a mixing apparatus such as a line mixer may be used for mixing. In order for ultra-fining of dispersed particles, a dispersing apparatus such as a bead mill or a high-pressure jet mill may be used for mixing. Depending on the type of pigment, polymer dispersing agent, or the like, a resin may be added at the time of pre-mixing carried out before a pigment dispersing treatment.

The ink composition of the present invention preferably has a surface tension at 25°C of no greater than 45 mN/m, and more preferably from 20 mN/m to 40 mN/m. The surface tension may be measured under conditions of 25°C using an automatic surface tensiometer CBVP-Z (trade name, manufactured by Kyowa Interface Science Co., Ltd.). It is preferable for the surface tension to be at least 20 mN/m since the wettability is appropriate, and image spreading is suppressed, and for it to be no greater than 40 mN/m since interference between fired droplets is suppressed and image graininess is reduced.

The viscosity is preferably from 1 mPa·s to 40 mPa·s, and more preferably from 3 mPa·s to 30 mPa·s. The viscosity of the ink composition may be measured under conditions of 25°C using a viscometer TV-22 (trade name, manufactured by Toki Sangho Co., Ltd.). When the viscosity is in the range described above, excellent discharge properties of the ink can be obtained, which is preferable.

### 2. Undercoat liquid

The undercoat liquid of the present invention has pH of no greater than 6. It becomes difficult to control interference between color ink droplets that have landed when the pH is more than 6.

The pH of the undercoat liquid is preferably 0.3 to 6.0, more preferably 0.4 to 5.0, yet more preferably 0.5 to 4.0, and particularly preferably 0.5 to 2.0.

Incidentally, the pH of the undercoat liquid is a value measured at 25°C.

The undercoat liquid preferably comprises an acidic compound in order to assure the above-mentioned pH range. The acidic compound may be either of an inorganic acidic compound or an organic acidic compound, and is not particularly limited. An organic acidic compound is preferable, and an organic acid is particularly preferable.

Examples of an inorganic acidic compound include sulfuric acid, hydrochloric acid, nitric acid, phosphoric acid, and salts thereof.

Examples of an organic acidic compound include polyacrylic acid, acetic acid, glycolic acid, malonic acid, malic acid, maleic acid, ascorbic acid, succinic acid, glutaric acid, fumaric acid, citric acid, tartaric acid, lactic acid, a sulfonic acid, orthophosphoric acid, metaphosphoric acid, pyrrolidone carboxylic acid, pyrone carboxylic acid, pyrrole carboxylic acid, furan carboxylic acid, pyridine carboxylic acid, coumaric acid, thiophene carboxylic acid, nicotinic acid, derivatives thereof, and salts thereof.

Among them, as an acidic compound an organic carboxylic acid (an organic acid having a carboxy group) or its salt is preferable. Examples of an organic carboxylic acid include acetic acid, glycolic acid, malonic acid, malic acid, maleic acid, ascorbic acid, succinic acid, glutaric acid, fumaric acid, citric acid, tartaric acid, and lactic acid.

The undercoat liquid includes, from the viewpoint of imparting a desired pH, preferably a two- or three-valent organic carboxylic acid or its salt, and more preferably a two-valent organic carboxylic acid or its salt. As the two-valent organic carboxylic acid (two-valent dibasic acid), malonic acid, malic acid, maleic acid, succinic acid, glutaric acid, fumaric acid, and citric acid are preferable.

Relative to the total mass of the undercoat liquid, the content of the acidic compound is preferably 3 to 60 mass%, more preferably 5 to 50 mass%, and yet more preferably 10 to 40 mass%. When the content of the acid compound is in the above-mentioned range, it is possible to create the aggregation of Component A and to control the interference between color ink droplets that have landed.

From the viewpoints of controlling interference between color ink composition droplets that have landed and controlling adverse effects of remaining acidic compounds, the amount of an acidic compound applied on a substrate is preferably 0.01 to 5 mmol·eq/m², more preferably 0.05 to 2.5 mmol ·eq/m² and yet more preferably 0.1 to 2 mmol·eq/m².

The undercoat liquid may be controlled as necessary by a basic compound in order to adjust its desired pH value. Examples of the basic compound include a hydroxide of alkali metal, and specifically include sodium hydroxide and potassium hydroxide.

The undercoat liquid is preferably a solution of the above-described acidic compound in water. Water is preferably ion-exchange water containing no impurities or distilled water.

The undercoat liquid may comprise other components as necessary in addition to the above-described components. As the other components, a surfactant and a water-soluble organic solvent are exemplified.

### (Water-soluble organic solvent)

The undercoat liquid of the present invention comprises water as a primary solvent, and further comprises preferably a water-soluble solvent. The water-soluble organic solvent referred to here means an organic solvent having a solubility in 100 parts by mass of water at 25°C of at least 10 parts by mass.

Specific examples of the water-soluble organic solvent that can be used in the present invention include the following solvents:
an alcohol (for example, methanol, ethanol, propanol, isopropanol, butanol, isobutanol, secondary butanol, tertiary butanol, pentanol, hexanol, cyclohexanol, benzyl alcohol, etc.),
a polyhydric alcohol (for example, ethylene glycol, diethylene glycol, triethylene glycol, polyethylene glycol, propylene glycol, dipropylene glycol, polypropylene glycol, butylene glycol, hexanediol, pentanediol, glycerol, hexanetriol, thiodiglycol, 2-methylpropanediol, etc.),
a polyhydric alcohol ether (for example, ethylene glycol monomethyl ether, ethylene glycol monoethyl ether, ethylene glycol monobutyl ether, diethylene glycol monoethyl ether, diethylene glycol monomethyl ether, diethylene glycol monobutyl ether, propylene glycol monomethyl ether, propylene glycol monobutyl ether, tripropylene glycol monomethyl ether, dipropylene glycol monomethyl ether, dipropylene glycol dimethyl ether, ethylene glycol monomethyl ether acetate, triethylene glycol monomethyl ether, triethylene glycol monoethyl ether, triethylene glycol monobutyl ether, ethylene glycol monophenyl ether, propylene glycol monophenyl ether, etc.),
an amine (for example, ethanolamine, diethanolamine, triethanolamine, *N*-methyldiethanolamine, *N*-ethyldiethanolamine, morpholine, *N-*ethylmorpholine, ethylenediamine, diethylenediamine, triethylenetetramine, tetraethylenepentamine, polyethyleneimine, pentamethyldiethylenetriamine, and tetramethylpropylenediamine, etc.),
an amide (for example, formamide, *N,N*-dimethylformamide, *N,N-*diethylacetamide, methoxypropionamide, *N*-methylmethoxypropionamide, *N,N-*dimethylmethoxypropionamide, *n*-buthoxypropionamide, *N*-methyl-*n-*buthoxypropionamide, *N,N*-dimethyl-*n*-buthoxypropionamide, etc.),
a heterocyclic compound (for example, 2-pyrrolidone, N-methyl-2-pyrrolidone, cyclohexylpyrrolidone, 2-oxazolidone, 1,3-dimethyl-2-imidazolidinone, γ-butyrolactone, propylene carbonate, ethylene carbonate, ethylene urea, etc.),
a sulfoxide (for example, dimethyl sulfoxide, etc.),
a sulfones (for example, sulfolane, etc.), and
the others (for example, urea, acetonitrile, acetone, etc.)

Preferred examples of a water-soluble solvent include the polyhydric alcohol ether and the heterocyclic compound, and it is preferable to use in combination of them.

As the polyhydric alcohol ether, the so-called glycol ether is preferable, and specific examples thereof include tripropylene glycol monomethyl ether, dipropylene glycol monomethyl ether, and dipropylene glycol dimethyl ether, and 2-dipropylene glycol monomethyl ether is more preferable.

As the heterocyclic compound, 2-pyrrolidone, γ-butyrolactone, propylene carbonate, or ethylene urea are preferable, and 2-pyrrolidone or γ-butyrolactone are particularly preferable.

A high boiling-point solvent can be particularly preferably used and the boiling point thereof under normal pressure is preferably not less than 120°C, and is more preferably not less than 150°C.

The water-soluble solvents may be used singly or in a combination of a plurality thereof.

The total content of the water-soluble solvent in the undercoat liquid is preferably 1 to 60 mass%, and more preferably 2 to 35 mass%.

### (Surfactant)

The undercoat liquid of the present invention may comprise a surfactant.

Preferred examples of the surfactant include anionic surfactants such as dialkylsulfosuccinic acid salts, alkylnaphthalenesulfonic acid salts, and fatty acid salts, nonionic surfactants such as polyoxyethylene alkyl ethers, acetylene glycols, and polyoxyethylene/polyoxypropylene block copolymers, and cationic surfactants such as alkylamine salts and quaternary ammonium salts. Anionic surfactants and nonionic surfactants can be particularly used.

In addition a polymer surfactant can be used in the present invention and the following water-soluble resins are preferred examples of a polymer surfactant. Preferred examples of the water-soluble resin used include a styrene-acrylic acid-alkyl acrylate copolymer, a styrene-acrylic acid copolymer, a styrene-maleic acid-alkyl acrylate copolymer, a styrene-maleic acid copolymer, a styrene-methacrylic acid-alkyl acrylate copolymer, a styrene-methacrylic acid copolymer, a styrene-maleic acid half ester copolymer, a vinylnaphthalene-acrylic acid copolymer, and a vinylnaphthalene-maleic acid copolymer.

In addition in the present invention, a silicone surfactant having a poly alkylsiloxane and a fluorine surfactant having a fluorinated alkyl group can be also preferably used.

When the undercoat liquid of the present invention comprises a surfactant, the content of the surfactant is preferably at least 0.1 mass% but no greater than 5 mass% by the solid amount of the surfactant, and particularly preferably at least 0.5 mass% but no greater than 2 mass% by the solid amount of the surfactant.

The undercoat liquid used in the present invention can be composed by using other additives other than above-described components. Examples of the other additives include known additives such as an anti-drying agent (a wetting agent), an antifungal agent, a pH-controlling agent, a viscosity modifier, an anticorrosive, a chelating agent, etc.

The undercoat liquid used in the present invention preferably has a surface tension at 25°C of no greater than 45 mN/m, and more preferably 20 to 40 mN/m. The surface tension is a value measured at 25°C by the Automatic Surface Tensiometer type CBVP-Z manufactured by Kyowa Interface Science Co., Ltd. When in the above-mentioned range, the surface wetting is excellent on a plastic substrate.

In order to control the surface tension in the above-mentioned range, it is preferable to control appropriately a kind of a surfactant and its amount of addition.

### 3. Inkjet recording method

The inkjet recording method of the present invention comprises, in order, a step of applying the undercoat solution of the present invention having a pH of no greater than six to a substrate, a discharge step of discharging the ink composition of the present invention onto the substrate to which the undercoat solution has been applied, a drying step of drying the ink composition above the substrate by means of heat, and a curing step of curing the ink composition above the substrate by irradiation with actinic radiation.

A drying step of drying the undercoat liquid may be incorporated after the step of applying the undercoat liquid of the present invention on the substrate and prior to the discharging step.

The inkjet recording method preferably includes a first wiping step of wiping the substrate surface before the curing step, and also preferably includes a second wiping step of wiping the substrate surface after the curing step.

Hereinafter, each step will be explained.

### (Step of applying undercoat liquid on substrate)

In the step of applying the undercoat liquid on the substrate, the undercoat liquid is preferably applied in the area either the same as or broader than the image area formed by discharged droplets of the ink composition on the substrate.

In the inkjet recording method of the present invention, as means for applying the undercoat liquid on top of the substrate, a coating machine, an inkjet nozzle, etc. may be used.

The coating machine is not particularly limited and may be appropriately selected from known coating machines according to the intended purpose, etc., and examples thereof include an air doctor coater, a blade coater, a rod coater, a knife coater, a squeegee coater, an immersion coater, a reverse roll coater, a transfer roll coater, a gravure coater, a kiss roll coater, a cast coater, a spray coater, a curtain coater, and an extrusion coater. Details may be referred to in 'Kothingu Kogaku (Coating Engineering)' by Yuji Harazaki.

Among them, in terms of equipment cost, application of the undercoat liquid on top of the substrate is preferably carried out by coating using a relatively inexpensive bar coater or spin coater or by applying by an inkjet method.

The undercoat liquid may be applied by coating using a coater or inkjet nozzles, etc. in the area containing image (in an area broader than image layer) as an entire undercoat layer or just in an image area by using inkjet nozzles.

The amount of the undercoat liquid applied on the substrate is not particularly limited, may be appropriately adjusted so as for the acidic compounds to be applied on the recording medium in a desired range, and is preferably at least 0.1 g/m² in view of the uniformness of the layer thickness. The amount of the acidic compounds applied is preferably 0.1 to 0.7 g/m². When the amount of the acidic compound is at least 0.1 g/m², it is possible to keep excellent high-speed aggregation responding to various using pattern. In addition, when the amount of an acidic compound applied is not more than 0.7 g/m², it is preferable since surface properties of the recording medium applied do not have an adverse effect (such as change of surface gross, etc.).

### <Step of drying undercoat layer>

The present invention may include a drying step of the undercoat liquid after the step of applying the undercoat liquid on a substrate and before the discharging step of an ink composition. When the surface of the substrate for discharging an ink composition is wet by the undercoat liquid, the image quality may tend to deteriorate by generating an ink blur, etc. When the inkjet recording method includes the drying step of the undercoat liquid, the surface of the substrate for discharging an ink composition is dried and an excellent image quality is obtained. When the amount of the undercoat liquid applied is small, the inkjet recording method may not include the drying step.

In the drying step of the undercoat liquid, from the undercoat liquid applied to the substrate, water and water-soluble solvent used in combination as necessary, are preferably evaporated by an appropriate heating means.

The undercoat liquid is preferably dried by heating.

The heating means is not limited as long as it is capable of drying water and an water-soluble solvent that are used in combination as necessary, but a heating drum, warm air, an ultra-red lamp, a heating oven, a heating plate and the like can be used.

The heating temperature is preferably at least 40°C, more preferably about 40°C to 150°C, and yet preferably about 40°C to 80°C. The drying/heating time can be appropriately set by taking the composition of the undercoat liquid used, the applying speed of the undercoat liquid, and the printing speed into consideration.

Moreover, the step of applying the undercoat liquid to the substrate and the optional step of drying the undercoat liquid may be followed continuously by the later-described discharge step. As an alternate method, the undercoat liquid is applied to the substrate in advance and after the undercoat liquid is dried as necessary, the substrate may be used thereafter without limitation.

Among them, since no pre-treated substrate is necessary, the step of applying and the discharge step is preferably carried out successively.

### (Discharge step)

The discharge step in the present invention is not particularly limited as long as it is a discharge step of discharging an ink composition onto a region of the substrate to which the undercoat solution has been applied, and is a step of discharging the ink composition of the present invention onto the substrate by an inkjet method.

In the inkjet recording method of the present invention, inkjet recording equipment used in the discharge step is not particularly limited and may be freely selected from known inkjet recording equipment that can achieve a desired resolution. That is, any known inkjet recording equipment, including commercial products, may carry out discharge of an ink composition onto a recording medium in the process for producing a decorative sheet of the present invention.

The inkjet recording device that can be used in the present invention is equipped with, for example, an ink supply system, a temperature sensor, and a heating means.

The ink supply comprises, for example, a main tank containing the ink composition of the present invention, a supply pipe, an ink composition supply tank immediately before an inkjet head, a filter, and a piezo system inkjet head. The piezo system inkjet head may be driven so as to discharge a multisize dot of preferably 1 to 100 pL, and more preferably 8 to 30 pL, at a resolution of preferably 320 x 320 to 4,000 x 4,000dpi (dot per inch), more preferably 400 x 400 to 1,600 x 1,600dpi, and yet more preferably 720 x 720 dpi. Here, dpi referred to in the present invention means the number of dots per 2.54 cm (1 inch).

Since the temperature of the discharged ink composition is desirably constant, the inkjet recording device is preferably equipped with means for stabilizing the temperature of the ink composition. The section for which the temperature is made constant includes the whole of a piping system and all of the members from an ink tank (middle tank where it is present) to a nozzle injection face. That is, a section from an ink supply tank to an inkjet head portion can be thermally insulated and heated.

A method of controlling temperature is not particularly limited, but it is preferable to provide, for example, temperature sensors at a plurality of piping locations, and control heating according to the ink flow rate and the temperature of the surroundings. The temperature sensors may be provided on the ink supply tank and in the vicinity of the inkjet head nozzle. Furthermore, the head unit that is to be heated is preferably thermally shielded or insulated so that the device main body is not influenced by the temperature of the outside air. In order to reduce the printer start-up time required for heating, or in order to reduce the thermal energy loss, it is preferable to thermally insulate the head unit from other sections and also to reduce the heat capacity of the entire heated unit.

When the ink composition is discharged using the above-mentioned inkjet recording device, the ink composition is preferably discharged after being heated to preferably 25°C to 80°C, and more preferably 25°C to 50°C, so as to reduce the viscosity of the ink composition to preferably 3 mPa·s to 15 mPa·s, and more preferably 3 mPa·s to 13 mPa·s. In particular, it is preferable to use an ink composition having an ink viscosity at 25°C of no greater than 50 mP·s as the ink composition of the present invention since discharging can be carried out well. By employing this method, high discharge stability can be realized.

It is preferable to maintain the ink composition discharge temperature as constant as possible. In the present invention, the control range for the temperature of the ink composition is preferably ±5°C of a set temperature, more preferably ±2°C of the set temperature, and yet more preferably ±1°C of the set temperature.

In the present invention, the discharge step is preferably carried out by a single pass method. In recent years, instead of a shuttle scanning method, which has usually been used, there has been a desire to carry out high speed recording by a single pass method, in which recording can be carried out by a single operation of a head. Since the printing speed in the conventional shuttle scanning method is low, a solvent in the ink composition is dried during printing, and it is hard for deposition interference to occur. On the other hand, in the single pass method, the printing speed is increased, and as a result the problem of deposition interference becomes more serious. The inkjet recording method of the present invention is particularly suitable for the single pass method since deposition interference can be sufficiently suppressed even when printing is carried out at high speed.

The inkjet method is not particularly limited and any known method may be used, such as for example a charge control method in which an ink is discharged by utilizing an electrostatic attraction force, a drop on-demand method in which oscillatory pressure of a piezo device is utilized (pressure pulse method), an acoustic inkjet method in which an ink is discharged by converting an electric signal into an acoustic beam, irradiating an ink therewith, and utilizing radiation pressure, and a thermal inkjet (bubble jet (registered trademark)) method in which an ink is heated to form a bubble and the pressure thus generated is utilized.

In addition, the inkjet method includes a method in which inks having a low concentration, called photo inks, are injected a large number of times at low volume, a method in which image quality is improved by using a plurality of inks having substantially the same hue but different concentrations, and a method in which a colorless transparent ink is used.

Furthermore, the inkjet head used in the inkjet method may be of an on-demand system or a continuous system. Specific examples of the discharge method include an electro-mechanical conversion method (e.g. a single cavity type, a double cavity type, a bender type, a piston type, a shear mode type, a shared wall type, etc.), an electro-thermal conversion method (e.g. a thermal inkjet type, a bubble jet (registered trademark) type, etc.), an electrostatic attraction method (e.g. an electric field control type, a slit jet type, etc.), and a discharge method (e.g. a spark jet type, etc.), but any discharge method may be used.

In addition, an ink nozzle, etc. used when carrying out recording by the inkjet method is not particularly limited and may be selected appropriately according to the intended application.

With regard to the inkjet head, there are a shuttle method in which a short-length serial head is used and recording is carried out while scanning the head in the width direction of a recording medium, and a line (single pass) method in which a line (single pass) head having recording devices arranged so as to correspond to the entire region of one side of a recording medium is used.

With regard to the inkjet recording method of the present invention, as described above, it is preferable to apply an ink composition to a recording medium by a single pass method using a single pass head.

In the line method, it is possible to carry out image recording on the entire face of a recording medium by scanning the recording medium in a direction perpendicular to the direction in which the recording devices are arranged, and a transport system such as a carriage for scanning a short-length head becomes unnecessary. It also becomes unnecessary to move a carriage and control complicated scanning thereof with respect to a substrate, and since only the substrate moves, compared with the shuttle method, high recording speed can be achieved.

The inkjet recording method of the present invention can suppress the occurrence of deposition interference by the use of the ink composition of the present invention and the undercoat solution of the present invention, and by discharging the ink composition by the single pass method the precision of discharge can be improved, and there is a large effect in suppressing corrosion due to contact between a nozzle plate and the ink.

Furthermore, in the discharge step in the present invention, since it employs a line method, not just one type of ink composition but two or more types of ink compositions are used, and recording can be carried out desirably by setting a discharge (firing) interval between an ink composition (nth color (n ≥ 1), e.g. 2nd color) that is discharged first and an ink composition ((n + 1)th color, e.g. 3rd color) that is discharged subsequent thereto so as to be no greater than one second. In the present invention, by setting the discharge interval at no greater than one second in the line method, an image having excellent scratch resistance and suppressed deposition interference can be obtained at a recording speed that is higher than the conventional speed while preventing the spreading or mixing of colors due to interference between ink droplets. Furthermore, an image having excellent hue and drawing properties (reproduction of fine lines and detailed parts of an image) can be obtained.

Furthermore, in the discharge step, the ink composition is discharged onto a region of a substrate to which the undercoat solution has been applied. It is surmised that an acidic compound is present in a region of the substrate to which the undercoat solution has been applied, and deposition interference is suppressed by aggregation, caused by the acidic compound, of Component A in the ink composition discharged onto this region.

From the viewpoint of obtaining an image with high resolution, the droplet volume of an ink discharged from an inkjet head is preferably 0.5 to 6 pL (picoliter), more preferably 1 to 5 pL, and yet more preferably 2 to 4 pL.

### (Drying step)

The imaging method of the present invention preferably comprises a drying step after the discharge step and before the curing step.

In the drying step, it is preferable for the ink composition discharged above the recording medium to be fixed as a result of water and a water-soluble organic solvent, which is used in combination as necessary, being evaporated by heating means.

The step (drying step) in which the discharged ink composition of the present invention is dried and fixed by the application of heat is now explained.

The heating means is not limited as long as it can dry water and a water-soluble organic solvent, which is used in combination as necessary, and examples thereof include a heated drum, hot air, an infrared lamp, a heated oven, and a heated plate.

The heating temperature is preferably at least 40°C, more preferably on the order of 40°C to 150°C, and yet more preferably on the order of 40°C to 80°C. The drying/heating time may be set appropriately while taking into consideration the constitution of the ink composition and the printing speed.

The ink composition fixed by heating is further cured in the curing step by irradiation with UV using a light source having a peak wavelength of 200 nm to 300 nm.

### (Curing step)

The curing step in the inkjet recording method of the present invention is explained below.

The curing step in the present invention is not limited as long as it is a step of irradiating the ink composition applied above the recording medium with active energy ray.

With regard to active energy ray that can be used in the curing step, a light source having a peak wavelength of 200 nm to 300 nm is used. The peak wavelength is preferably 200 nm to 280 nm. As a result of irradiation with actinic radiation having such a wavelength, a 2+2 cycloaddition reaction of the partial structure represented by Formula (1) in the specific copolymer is caused, thus curing the ink composition.

It is preferably to irradiate with UV light at an exposed surface illuminance of, for example, 10 mW/cm² to 2,000 mW/cm², and more preferable 20 mW/cm² to 1,000 mW/cm².

As the UV light source, a mercury lamp, a gas/solid laser and the like are mainly used, and a mercury lamp, a metal halide lamp and a fluorescent lamp are widely known. Furthermore, replacement with GaN-based semiconductor ultraviolet emitting devices is industrially and environmentally very useful, and LED (UV-LED) and LD (UV-LD) are devices of small size, long service life, high efficiency and low cost, and are expected to be used as UV light sources.

In the present invention, it is preferable not to use a sensitizing dye or a photopolymerization initiator in combination, and the light source is preferably a medium-pressure mercury lamp or a low-pressure mercury lamp, and more preferably a low-pressure mercury lamp.

In the curing step, the ink composition of the present invention is irradiated with the UV light suitably for, for example, 0.01 seconds to 120 seconds, and preferably 0.1 seconds to 90 seconds.

Irradiation of an active energy ray is carried out after a certain time (for example, 0.01 seconds to 120 seconds, and preferably 0.1 seconds to 60 seconds) after discharging of the ink and heat drying.

As irradiation conditions and basic irradiating methods, irradiation conditions and basic irradiating methods disclosed in JP-A-60-132767 can be applied in the present invention in the same manner. Specifically, examples thereof include a method in which light sources provided on both sides of a head unit including an ink discharging device and the head unit and the light sources are scanned in a so-called shuttle method, and a method in which irradiation is performed by separate light sources that do not involve driving.

### (First wiping step and second wiping step)

The inkjet recording method of the present invention preferably comprises, subsequent to the discharge step but prior to the curing step, a first wiping step of wiping the substrate surface. The first wiping step may be carried out either prior to the drying step or subsequent to the drying step and is not particularly limited.

It is also preferable to carry out a second wiping step of wiping the substrate surface subsequent to the curing step. Hereinafter, the first wiping step and the second wiping step are also collectively called simply the 'wiping step'.

Due to there being the wiping step, water and a water-soluble organic solvent, which is used as necessary, in the ink composition and the undercoat solution are removed effectively. Furthermore, the undercoat solution of the non-image area is removed, and the amount of acidic compound remaining on the substrate is reduced.

Since the first wiping step is prior to the curing step, the image is sometimes disturbed, and it is more preferable for there to be the second wiping step.

The wiping step is preferably a step of wiping the substrate surface using wiping means such as a fabric such as a non-woven fabric or a woven fabric, a resilient substance such as a sponge, or one obtained by wetting the above with water, etc. Furthermore, it may be for example a roller for carrying out wiping while applying water and/or a solvent to a cured image (e.g. a web roller), etc. Moreover, it may be a step of carrying out wiping using wiping means comprising two members, that is, a member for applying water and/or a solvent and a wiping member.

The second wiping step in particular is preferably a step of carrying out wiping of the substrate surface using wiping means that is wetted with water, etc. This is preferable since it removes effectively an acidic substance, contained in the undercoat solution, remaining on the substrate surface.

### <Substrate>

In the present invention, the substrate is not particularly limited, and a known substrate known as a support or a recording medium may be used. Examples thereof include paper, paper laminated with a plastic (e.g. polyethylene, polypropylene, polystyrene, etc.), a metal plate (e.g. aluminum, zinc, copper, etc.), a plastic film (e.g. cellulose diacetate, cellulose triacetate, cellulose propionate, cellulose butyrate, cellulose acetate butyrate, cellulose nitrate, polyethylene terephthalate, polyethylene, polystyrene, polypropylene, polycarbonate, polyvinylacetal, etc.), and paper or plastic film laminated or vapor-deposited with the above metal. In the present invention, as the substrate, a non-absorbing substrate is preferable, and a plastic substrate (a plastic film) is more preferable.

The ink set of the present invention preferably comprises at least one ink composition and an undercoat solution. In the present invention, an ink set comprising a plurality of types of ink compositions and one type of undercoat solution is more preferable. The plurality of types of ink compositions are preferably ink compositions of each color; examples include, but are not limited to, inks of each color of yellow, cyan, magenta, and black. An embodiment comprising an ink composition of a light color such as light cyan or light magenta, an embodiment comprising a white ink composition, an embodiment comprising an ink of a special color such as green or orange, an embodiment comprising a metal ink composition of a metallic color, etc. may be employed.

When there are a plurality of types of ink compositions, any of the ink compositions may comprise Component A to Component C, but it is preferable for all the ink compositions to be the ink composition of the present invention comprising Component A to Component C.

In the present invention, the order in which ink compositions are discharged is not particularly limited, but it is preferable to apply to a substrate from a ink composition having a high lightness; when the ink compositions of yellow, cyan, magenta, and black are used, they are preferably applied on top of the substrate in the order yellow → cyan → magenta → black. Furthermore, when white is additionally used, they are preferably applied on top of the substrate in the order white → yellow → cyan → magenta → black. Moreover, the present invention is not limited thereto, and an ink set comprising a total of seven colors, that is, light cyan, light magenta ink compositions and cyan, magenta, black, white, and yellow dark ink compositions may preferably be used, and in this case they are preferably applied on top of the substrate in the order white → light cyan → light magenta → yellow → cyan → magenta → black.

### Examples

The present invention is explained below more specifically by reference to Examples and Comparative Examples. However, the present invention should not be construed as being limited by these Examples.

'Parts' in the description below means 'parts by mass' and '%' means 'mass %' unless otherwise specified.

### (Synthesis of compounds A-1 to A-4 and C-1)

Compounds A-1 to A-4 and C-1 shown below were synthesized in accordance with the descriptions of JP-A-52-988. Each polymer compound thus synthesized was used by re-precipitating in a large amount of hexane and then dissolving in an aqueous solution of sodium bicarbonate (Wako Pure Chemical Industries, Ltd.).

Of compounds A-1 to A-4 and C-1, a, b, c, and d mean the mass% of the monomer units.

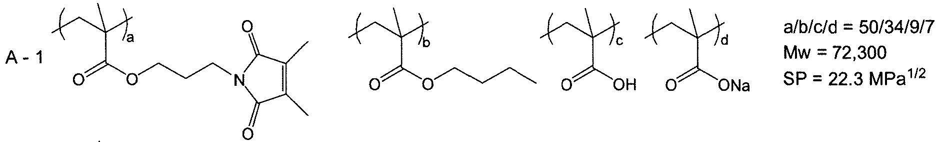

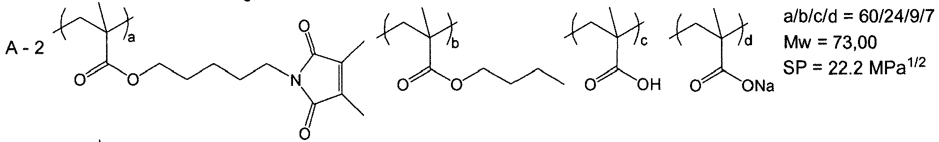

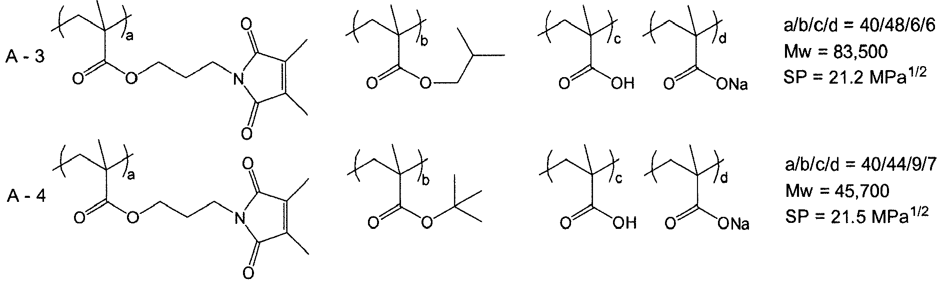

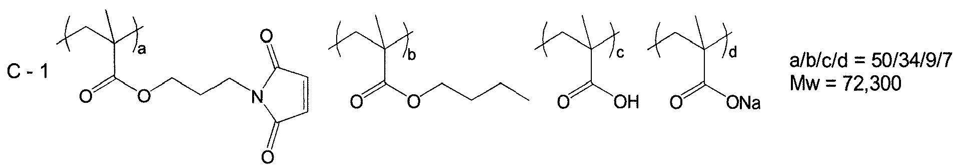

### (Preparation of ink compositions)

Ink compositions were prepared by stirring the components below using a mixer (Silverson L4R) at room temperature and 3,000 rpm for 20 minutes. In the tables, '-' means that the corresponding component was not contained. Furthermore, the viscosity, surface tension, and pH in the tables were measured at 25°C.

**(Table 2)**

| Example | | Ink set 1 cyan | Ink set 2 cyan | Ink set 3 cyan | Ink set 4 cyan |
|---|---|---|---|---|---|
| Dispersion (cyan) | | 2 | 2 | 2 | 2 |
| DMI polymer | A-1 | 10 | - | - | - |
| | A-2 | - | 10 | - | - |
| | A-3 | - | - | 10 | - |
| | A-4 | - | - | - | 10 |
| 2-Pyrollidone | | 20 | 20 | 20 | 20 |
| 2-Methyl-1,3-propanediol | | 18 | 18 | 18 | 18 |
| Capstone FS31 | | 0.1 | - | 0.1 | 0.1 |
| Olfine E1010 | | - | 0.1 | - | - |
| Water | | 49.9 | 49.9 | 49.9 | 49.9 |
| Viscosity | | 12 mPa·s | 12 mPa·s | 13 mPa·s | 11 mPa·s |
| Surface tension | | 24 mN/m | 36 mN/m | 24 mN/m | 23 mN/m |
| pH | | 8 | 8 | 8 | 8 |

**(Table 3)**

| Comparative Example | | Ink set 1 cyan | Ink set 2 cyan | Ink set 3 cyan | Ink set 4 cyan |
|---|---|---|---|---|---|
| Dispersion (cyan) | | 2 | 2 | 2 | 2 |
| Polymer | HMA/BzMA/MAA | 10 | - | - | - |
| | EHMA/MAA | - | 10 | - | - |
| | C-1 | - | - | - | 10 |
| HEAA | | - | - | 15 | - |
| 2-Pyrrollidone | | 20 | 20 | 20 | 20 |
| 2-Methyl-1,3-propanediol | | 18 | 18 | 25 | 18 |
| Capstone FS31 | | 0.1 | - | 0.1 | 0.1 |
| Olfine E1010 | | - | 0.1 | - | - |
| Water | | 49.9 | 49.9 | 37.9 | 49.9 |
| Viscosity | | 12 mPa·s | 12 mPa·s | 10 mPa·s | 11 mPa·s |
| Surface tension | | 24 mN/m | 36 mN/m | 24 mN/m | 23 mN/m |
| pH | | 8 | 8 | 8 | 8 |

Furthermore, an ink set comprising a cyan color and a magenta color was made in the same manner except that the cyan dispersion was changed to a magenta dispersion.

Components used in Tables 2 and 3 were as follows.
M dispersion: magenta color pigment dispersion Projet Magenta APD 1000 (Fujifilm Imaging Colorants Limited)
C dispersion: cyan color pigment dispersion Projet Cyan APD 1000 (Fujifilm Imaging Colourants Limited)
2-Pyrrolidone (2-pyrrollidone, Wako Pure Chemical Industries, Ltd.)
2-Methyl-1,3-propanediol (2-methyl-1,3-propanediol, Tokyo Chemical Industry Co., Ltd.)
Capstone FS31 (fluorine-based surfactant, DuPont)
Olfine E1010 (Nissin Chemical Industry Co., Ltd.)
Water: ion-exchanged water was used
HEAA (hydroxyethylacrylamide, Kohjin Co., Ltd.)
HMA (hexyl methacrylate, Tokyo Chemical Industry Co., Ltd.)
BzMA (benzyl methacrylate, Wako Pure Chemical Industries, Ltd.)
MAA (methacrylic acid, Wako Pure Chemical Industries, Ltd.)
EHMA (2-ethylhexyl methacrylate)

### (Synthesis of polymer used in Comparative Examples)

### <Synthesis of HMA/BzMA/MAA = 40/44/16 (mass ratio) >

A 200 mL 3-necked flask equipped with a stirring blade was charged with 10.0 g of 2-butanone (Wako Pure Chemical Industries, Ltd.), and stirring was then carried out under a flow of nitrogen while heating at 80°C for 10 minutes. Subsequently, a mixed solution of 13.2 g of benzyl methacrylate (Wako Pure Chemical Industries, Ltd.), 12.0 g of hexyl methacrylate (Tokyo Chemical Industry Co., Ltd.), 4.8 g of methacrylic acid (Wako Pure Chemical Industries, Ltd.), 0.11 g of 3-mercaptopropionic acid (Tokyo Chemical Industry Co., Ltd.), 46 mg of dimethyl 2,2'-azobis(isobutyrate) (Wako Pure Chemical Industries, Ltd.), 25 g of 2-butanone, and 5 g of 2-propanol (Wako Pure Chemical Industries, Ltd.) was added dropwise over 2 hours. After stirring for a further 2 hours, 46 mg of dimethyl 2,2'-azobis(isobutyrate) was added, and stirring was carried out under reflux while heating for 3 hours. 200 g of acetone was added to a polymer solution thus obtained, and re-precipitation from 3 L of *n*-hexane was carried out. The precipitate thus formed was separated by filtration and dried under vacuum, thus giving 28 g of a white solid. Subsequently, neutralization with 2.5 g of sodium bicarbonate and dilution with water were carried out, thus giving a polymer aqueous solution with a concentration of 17.5%.

The SP value of the polymer thus obtained was evaluated by the Okitsu method and found to be 19.9, and the glass transition temperature was measured using a differential scanning calorimeter (EXTAR DSC6220 (SII Nanotechnology Inc.)). Furthermore, the weight-average molecular weight was measured using gel permeation chromatography (HLC-8020GPC (Tosoh Corporation)) under the conditions below.
GPC columns: TSKgel SuperHZM-H, TSKgel SuperHZ4000, TSKgel SuperHZ200 (Tosoh Corporation, 4.6 mm ID × 15 cm)
GPC measurement conditions: temperature 40°C, eluent: tetrahydrofuran

The weight-average molecular weight of the polymer obtained was 50,000, the SP value was 19.9, and the Tg was 62°C.

### <Synthesis of EHMA/MAA = 20/80 (mass ratio)>

A polymer was obtained in the same manner as in the above synthetic method except that HMA, BzMA, and MAA as starting materials were changed to EHMA and MAA.

The weight-average molecular weight of the polymer obtained was 50,000, the SP value was 22.7, and the Tg was 151°C.

### (Preparation of undercoat solution)

### <Undercoat solution 1>

10 parts of malonic acid and 10 parts of malic acid were added to 75 parts of pure water, and 5 parts of TPGmME (tripropylene glycol monomethyl ether) was added thereto, thus giving 100 parts of undercoat solution 1. Undercoat solution 1 had a pH of 1.3 and a surface tension of 42 mN/m. <Undercoat solution 2>

10 parts of malonic acid and 10 parts of malic acid were added to 74.9 parts of pure water, and 5 parts of TPGmME and 0.1 parts of Capstone FS31 were added thereto, thus giving 100 parts of undercoat solution 1. Undercoat solution 2 had a pH of 1.3 and a surface tension of 24 mN/m.

### <Undercoat solutions 3, 4, and 5>

5 parts of malonic acid and 5 parts of malic acid were added to 30 parts of pure water, the pH was adjusted with 0.1 mol/L aq NaOH, 5 parts of TPGmME was added thereto, and pure water was added so as to make up the total amount to 100 parts, thus giving undercoat solutions 3, 4, and 5 as follows.

Undercoat solution 3 had a pH of 4.0 and a surface tension of 42 mN/m.

Undercoat solution 4 had a pH of 5.7 and a surface tension of 44 mN/m.

Undercoat solution 5 had a pH of 7.0 and a surface tension of 47 mN/m.

### <Undercoat solution 6>

7 parts of malonic acid and 7 parts of malic acid were added to 81 parts of pure water, and 5 parts of TPGmME was added thereto, thus giving 100 parts of undercoat solution 6. Undercoat solution 6 had a pH of 1.8 and a surface tension of 47 mN/m.

### <Undercoat solution 7>

20 parts of acetic acid was added to 75 parts of pure water, and 5 parts of TPGmME was added thereto, thus giving 100 parts of undercoat solution 7. Undercoat solution 6 had a pH of 3.2 and a surface tension of 45 mN/m.

Components used in the undercoat solutions were as follows.
Malonic acid (Tokyo Chemical Industry Co., Ltd.)
Malic acid (Tokyo Chemical Industry Co., Ltd.)
TPGmME (tripropylene glycol monomethyl ether (boiling point: 243°C)

### (Substrates)

YUPO#80 food grade GS (Maruu)
PET#50 strong adhesion, thick B (Maruu)

### (Preparation of image sample)

When forming an image, the substrate (recording medium, paper piece cut into A5 size) was fixed onto a stage that could move in a predetermined linear direction at 500 mm/sec, and the stage temperature was maintained at 30°C. This was coated with the undercoat solution obtained above using a bar coater at a thickness of about 1.2 µm (0.5 g/m²), and immediately after coating it was dried at 50°C for 2 seconds. Subsequently, inkjet heads for two colors of magenta and cyan were fixedly arranged so that the direction (main scanning direction) of a line head in which nozzles were arranged was inclined at 75.7 degrees with respect to a direction perpendicular to the direction of movement of the stage (sub scanning direction), magenta and cyan inks were discharged by the line method while moving the substrate at a constant speed in the sub scanning direction, and an image thus obtained was dried at 70°C for 2 seconds and then irradiated with 1 W/cm² using a low-pressure mercury lamp (emission wavelength 254 nm), thus giving a sample. Furthermore, depending on the specification, a sample was produced by adding, after discharging and drying, a step of wiping the image face with a non-woven Web roll, and after irradiation with the mercury lamp, a step of wiping the image face with a wetted non-woven Web roll.

Evaluation of the sample thus obtained was carried out as follows.

### <Deposition interference>

PET#50 strong adhesion, thick B (Maruu) was used, and magenta and cyan were discharged in that order. Discharge conditions for each nozzle were an ink droplet volume of 2.8 pL, a discharge frequency of 25.5 kHz, and a resolution of 1,200 dpi × 1,200 dpi. The character 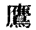 (3, 4, and 5 pt) was printed by the above formation method using magenta, cyan, and blue in sequence and evaluated using the criteria below. A to C had no problems in practice.

### Evaluation criteria

A: there was no interference between adjacent droplets and the character 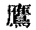 was clearly readable at 3, 4, and 5 pt.
B: there was interference between adjacent droplets, but the character 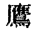 was readable at 3, 4, and 5 pt.
C: there was interference between adjacent droplets, but the character 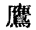 was readable at 4 and 5 pt.
D: there was interference between adjacent droplets and the character 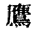 was not readable at 3, 4, or 5 pt.

### <Curability>

PET#50 strong adhesion, thick B (Maruu) was used, and magenta and cyan were discharged in that order. Discharge conditions for each nozzle were an ink droplet volume of 2.8 pL, a discharge frequency of 25.5 kHz, and a resolution of 1,200 dpi × 1,200 dpi. Magenta and cyan solid images were printed in sequence by the above formation method, and curability was evaluated within 3 minutes. With regard to curability, C2 copier paper (Fuji Xerox Co., Ltd.) was pressed against an image face with an applied load of 1 kg/m² for 2 seconds, and the state after peeling off was examined. A to C had no problems in practice.

### Evaluation criteria

A: no peeling occurred in coating and no sound occurred when peeling.
B: no peeling occurred in coating but sound occurred when peeling.
C: no peeling occurred in coating but there was some transfer of coating.
D: peeling occurred in coating

### <Adhesion: tape peel-off test>

A tape peel-off test was carried out using a sample prepared in the same manner as for curability. Adhesive tape (brand name: Sellotape (registered trademark), Nichiban Co., Ltd.) was adhered to each print sample so that the entire face was covered by the tape, and the tape was then immediately peeled off. Tape adhesion resistance was evaluated in accordance with the evaluation criteria below by examining color transfer to the peeled tape and the area of the paper face from which the tape had been peeled off.

### Evaluation criteria

A: no color transfer was observed on adhesive tape and there was no image peel-off of paper face.
B: slight color transfer was observed on adhesive tape, but image peel-off of paper face was not visible.
C: slight color transfer was observed on adhesive tape and slight image peel-off of paper face was visible.
D: more than a little color transfer was observed on adhesive tape and image peel-off of paper face was also easily visible.
E: color was transferred to entire face of adhesive tape and image of paper face peeled off.

A to C was a range in which there were no problems in practice.

### <Method for evaluating amount of compound remaining on non-image area>

YUPO#80 food grade was used as a substrate, 10 mL of a mixed solvent of water:ethanol = 70:30 was dropped on a printed material surface, and the entire printed material was placed in a hermetically sealed glass container so that the mixed solvent did not evaporate and allowed to stand at 40°C for 10 days. Subsequently, the total amount leaching (overall migration amount: OML) from a film contained in the mixed solution of water and ethanol was calculated, and evaluation was carried out using four levels. Measurement of the total amount leaching was carried out by allowing to stand for 10 days, evaporating the collected water/ethanol mixed solution, and measuring the mass of residual components. A to B was a range in which there were no problems in practice.

### Evaluation criteria

A: amount leaching was no greater than 50 ppb
B: amount leaching exceeded 50 ppb but was no greater than 200 ppb
C: amount leaching exceeded 200 ppb but was no greater than 2,000 ppb
D: amount leaching exceeded 2,000 ppb

**(Table 4)**

| | Ink set | Undercoat solution | Undercoat solution pH | Undercoat solution surface tension (mN/m) | Wiping step 1 | Wiping step 2 | Exposure | Deposition interference | Curability | Adhesion | Amount of residual compound in non-image area |
|---|---|---|---|---|---|---|---|---|---|---|---|
| Example 1 | Example ink set 1 | Undercoat solution 1 | 1.3 | 42 | - | - | Mercury lamp | A | B | B | B |
| Example 2 | Example ink set 1 | Undercoat solution 1 | 1.3 | 42 | - | Web roller | Mercury lamp | A | A | B | A |
| Example 3 | Example ink set 1 | Undercoat solution 1 | 1.3 | 42 | Web roller | Web roller | Mercury lamp | A | A | A | A |
| Example 4 | Example ink set 2 | Undercoat solution 1 | 1.3 | 42 | - | Web roller | Mercury lamp | A | A | B | A |
| Example 5 | Example ink set 3 | Undercoat solution 1 | 1.3 | 42 | - | Web roller | Mercury lamp | B | B | B | A |
| Example 6 | Example ink set 4 | Undercoat solution 1 | 1.3 | 42 | - | Web roller | Mercury lamp | A | A | A | A |
| Example 7 | Example ink set 1 | Undercoat solution 2 | 1.3 | 24 | - | Web roller | Mercury lamp | A | B | B | A |
| Example 8 | Example ink set 2 | Undercoat solution 3 | 4.0 | 42 | - | Web roller | Mercury lamp | B | B | B | A |
| Example 9 | Example ink set 3 | Undercoat solution 4 | 5.7 | 44 | - | Web roller | Mercury lamp | C | B | B | B |
| Example 10 | Example ink set 3 | Undercoat solution 6 | 1.8 | 47 | - | Web roller | Mercury lamp | C | B | B | B |
| Example 11 | Example ink set 3 | Undercoat solution 7 | 3.2 | 45 | - | Web roller | Mercury lamp | C | B | C | B |
| Comparative Example 1 | Comparative Example ink set 1 | Undercoat solution 1 | 1.3 | 42 | - | - | Mercury lamp | A | D | C | C |
| Comparative Example 2 | Comparative Example ink set 2 | Undercoat solution 1 | 1.3 | 42 | - | - | Mercury lamp | A | D | D | C |
| Comparative Example 3 | Comparative Example ink set 3 | Undercoat solution 1 | 1.3 | 42 | - | - | Mercury lamp | A | D | B | C |
| Comparative Example 4 | Comparative Example ink set 4 | Undercoat solution 1 | 1.3 | 42 | - | - | Mercury lamp | A | D | C | C |
| Comparative Example 5 | Example ink set 1 | Undercoat solution 5 | 7.0 | 47 | - | - | Mercury lamp | D | C | C | C |
| Comparative Example 6 | Example ink set 1 | - | - | - | - | - | Mercury lamp | D | D | D | C |

## Claims

1. An inkjet recording method comprising, in order,
a step of applying an undercoat solution having a pH of no greater than six to a substrate,
a discharge step of discharging an ink composition onto the substrate to which the undercoat solution has been applied,
a drying step of drying the ink composition above the substrate by means of heat, and
a curing step of curing the ink composition above the substrate by irradiation with actinic radiation,
the ink composition comprising (Component A) a polymer compound comprising a monomer unit (a-1) having a partial structure represented by Formula (1) below, (Component B) water, and (Component C) a pigment, 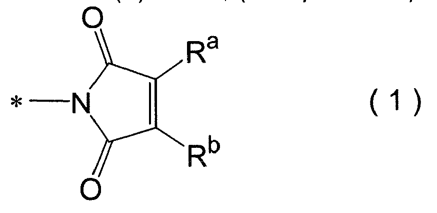 wherein in Formula (1), R^{a} and R^{b} mutually independently denote a hydrogen atom or an alkyl group having 1 to 4 carbons, at least one of R^{a} and R^{b} denotes an alkyl group having 1 to 4 carbons, R^{a} and R^{b} may be bonded to each other to form a 4- to 6-membered alicyclic structure, and * denotes a position of bonding.

2. The inkjet recording method according to Claim 1, wherein Component A has an SP value of 20.7 MPa^{1/2} to 23.0 MPa^{1/2}.

3. The inkjet recording method according to Claim 1 or 2, wherein Component A further comprises a hydrophilic group-containing monomer unit (a-2), the monomer unit (a-2) having in Component A a content of 5 mass% to 45 mass%.

4. The inkjet recording method according to Claim 3, wherein the hydrophilic group-containing monomer unit (a-2) is represented by Formula (3) below, 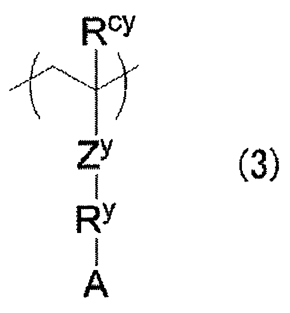 wherein in Formula (3) R^{cy} denotes a hydrogen atom or a methyl group, Z^{y} denotes -COO-***, -CONR^{dy}-***, or a single bond, R^{dy} denotes a hydrogen atom or an alkyl group having 1 to 4 carbons, R^{y} denotes a single bond, an alkylene group having 1 to 10 carbons, an arylene group having 6 to 20 carbons, or an aralkylene group having 7 to 20 carbons, A denotes a hydrophilic group, and *** denotes the position via which Z^{y} is bonded to R^{y}.

5. The inkjet recording method according to any one of Claims 1 to 4, wherein the substrate is a non-permeable substrate.

6. The inkjet recording method according to any one of Claims 1 to 5, wherein the substrate is a non-permeable plastic substrate.

7. The inkjet recording method according to any one of Claims 1 to 6, wherein the discharge step is carried out by a single pass method.

8. The inkjet recording method according to any one of Claims 1 to 7, wherein the undercoat solution comprises an organic acid.

9. The inkjet recording method according to any one of Claims 1 to 8, wherein the undercoat solution has a surface tension of no greater than 45 mN/m.

10. The inkjet recording method according to any one of Claims 1 to 9, wherein the ink composition has a surface tension of no greater than 45 mN/m.

11. The inkjet recording method according to any one of Claims 1 to 10, wherein Component A comprises 8 to 200 of the partial structures represented by Formula (1) per molecule.

12. The inkjet recording method according to any one of Claims 1 to 11, wherein the monomer unit (a-1) having a partial structure represented by Formula (1) is a monomer unit represented by Formula (2) below, 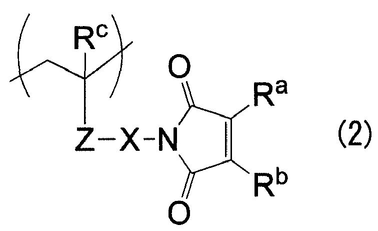 wherein in Formula (2), R^{a} and R^{b} mutually independently denote a hydrogen atom or an alkyl group having 1 to 4 carbons, at least one of R^{a} and R^{b} denotes an alkyl group having 1 to 4 carbons, R^{a} and R^{b} may be bonded to each other to form a 4- to 6-membered alicyclic structure, R^{c} denotes a hydrogen atom or a methyl group, Z denotes a single bond, -COO-**, or-CONR^{d}-**, R^{d} denotes a hydrogen atom or an alkyl group having 1 to 4 carbons, ** denotes the position of bonding to X, and X denotes a divalent organic group.

13. The inkjet recording method according to any one of Claims 1 to 12, wherein Component C is contained at 10 to 97 mass% of the entire ink composition.

14. The inkjet recording method according to any one of Claims 1 to 13, wherein the ink composition has a viscosity of 5 mPa·sec to 30 mPa·sec.

15. The inkjet recording method according to any one of Claims 1 to 14, wherein the ink composition comprises an organic solvent.

16. The inkjet recording method according to any one of Claims 1 to 15, wherein the inkjet recording method comprises, after the discharge step but prior to the curing step, a first wiping step of wiping the substrate surface.

17. The inkjet recording method according to any one of Claims 1 to 16, wherein the inkjet recording method comprises, after the curing step, a second wiping step of wiping the substrate surface.

18. A printed material obtained by the method according to any one of Claims 1 to 17.

19. An ink set for inkjet recording comprising
an undercoat solution having a pH of no greater than six and an ink composition,
the ink composition comprising (Component A) a polymer compound comprising a monomer unit (a-1) having a partial structure represented by Formula (1) below, (Component B) water, and (Component C) a pigment. 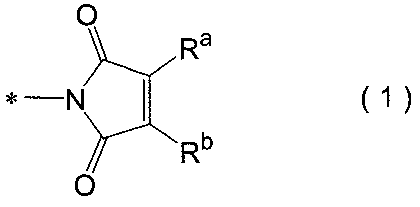 wherein in Formula (1), R^{a} and R^{b} mutually independently denote a hydrogen atom or an alkyl group having 1 to 4 carbons, at least one of R^{a} and R^{b} denotes an alkyl group having 1 to 4 carbons, R^{a} and R^{b} may be bonded to each other to form a 4- to 6-membered alicyclic structure, and * denotes a position of bonding.
